# EUROPEAN PATENT SPECIFICATION

(11) **EP 3 328 106 B1**
(45) Date of publication and mention of the grant of the patent: **12.08.2020**
(21) Application number: 15900857.2
(22) Date of filing: 25.09.2015
(51) Int. Cl.: H04W 12/04, H04W 12/06, H04W 48/16, H04W 84/04, H04W 84/12, H04L 29/06

(54) **ACCESS VERIFICATION METHOD AND APPARATUS**
ZUGANGSVERIFIZIERUNGSVERFAHREN UND -VORRICHTUNG
PROCÉDÉ ET APPAREIL DE VÉRIFICATION D'ACCÈS

(30) Priority: 11.08.2015 WO PCT/CN2015/086637
(43) Date of publication of application: 30.05.2018
(73) Proprietor: Huawei Technologies Co., Ltd., Longgang District Shenzhen, Guangdong 518129 (CN)
(72) Inventor: SHI, Xiaoli, Shenzhen Guangdong 518129 (CN); LUO, Haiyan, Shenzhen Guangdong 518129 (CN)
(74) Representative: Pfenning, Meinig & Partner mbB
(86) International application number: PCT/CN2015/090766
(87) International publication number: WO 2017/024662

(56) References cited:
- WO-A1-2013/181847
- WO-A1-2013/181847
- CN-A- 1 663 168
- CN-A- 101 120 534
- CN-A- 103 026 745
- US-A1- 2005 138 355

## Description

### TECHNICAL FIELD

The present invention relates to the field of communications technologies, and in particular, to an access authentication method and apparatus.

### BACKGROUND

Due to popularization of intelligent terminals and development of the mobile Internet, mobile service data traffic explosively increases. Consequently, it is more difficult for a 3rd Generation Partnership Project (3rd Generation Partnership Project, 3GPP for short) network to meet a requirement for growing data traffic. A mobile operator relieves traffic pressure of a 3GPP network by means of cooperation between the 3GPP network and a non-3GPP network, for example, cooperation between the 3GPP network and a wireless local area network (Wireless Local Area Network, WLAN for short).

During cooperation between an existing WLAN and the 3GPP network, when service overload occurs in the 3GPP network, all or some services of users in a coverage area of the WLAN may be offloaded to the WLAN. When the cooperation between the WLAN and the 3GPP network is being implemented, a security problem still needs to be considered when UE communicates with the 3GPP network by using the WLAN. Therefore, for the convenience of the user, unified authentication between the WLAN and the 3GPP network needs to be implemented.

A current solution is as follows: WLAN authentication is still performed in an authentication manner specified in a 3GPP protocol. Currently, a common authentication manner is the 802.1X Extensible Authentication Protocol-Authentication and Key Agreement (Extensible Authentication Protocol-Authentication and Key Agreement, EAP-AKA for short). The EAP-AKA authentication manner requires deployment of a 3GPP Authentication, Authorization, and Accounting (Authentication, Authorization and Accounting, AAA for short) server (Server). After user equipment (User Equipment, UE for short) accesses a

3GPP network and security authentication succeeds, when multi-stream aggregation data transmission such as LTE-WLAN aggregation (LTE-WLAN Aggregation, LWA for short) data transmission needs to be performed, identity authentication on the UE needs to be first performed on the AAA server when the UE accesses a WLAN. After the identity authentication succeeds, the UE and an access point (Access Point, AP for short) in the WLAN obtain a key that is determined by the AAA server for the AP. Then, the UE and the AP perform 4-way handshake authentication based on the obtained key. The UE and the AP can communicate with each other only after the authentication succeeds. It is learned from the existing solution that, in the EAP-AKA authentication manner, when the UE is being associated with the AP, identity authentication on the UE needs to be first performed on the AAA server, and the key needs to be negotiated. Then, the UE and the AP perform 4-way handshake authentication based on the negotiated key. Signaling interaction needs to be performed multiple times in an entire authentication process, and the process is cumbersome. Therefore, signaling overheads increase, and an authentication time is relatively long.

WO 2013/181847 A1 discloses an access point equipment obtains user identifier of the user equipment by the WLAN; then finds the key used for the air interface encryption between the user equipment and 3GPP network according to the user identifier; and sends the authentication success information carrying the key or the deriving key of the key to the user equipment by the WLAN to indicate the permission that the user equipment using the key or the deriving key of the key to access WLAN.

US 2005/0138355 A1 discloses a system for authentication in a wireless local area network including a CDMA2000 authentication center for authenticating CDMA2000 credentials, a WLAN authenticating server for using the CDMA2000 credentials to authenticate WLAN devices holding CDMA2000 credentials, and at least one WLAN device holding CDMA2000 credentials. The WLAN server performs a CDMA2000 global challenge and response and a CDMA2000 unique challenge and response with a WLAN device to obtain a CDMA2000 encryption key. The WLAN server derives a master key from the CDMA2000 encryption key and uses the mater key to perform a WLAN challenge and response with the WLAN device and then derives session keys from the master key. The session keys protect communications between the WLAN access point and the WLAN device.

### SUMMARY

Embodiments of the present invention provide an access authentication method and apparatus, so as to resolve prior art problems of a relatively long authentication time and high signaling overheads. The invention is defined by the subject-matter of the independent claims. Advantageous enhancements are subject to the dependent claims.

According to a first aspect, an embodiment of the present invention provides an access authentication method, including:
determining, by a cellular network access device, a key identifier; and
separately sending, by the cellular network access device, the key identifier to user equipment UE and a non-cellular network access device, where the key identifier is used to instruct the UE to perform security authentication with the non-cellular network access device based on a key corresponding to the key identifier.

With reference to the first aspect, in a first possible implementation of the first aspect, the determining, by a cellular network access device, a key identifier includes:
determining, by the cellular network access device, a logical functional entity managing the non-cellular network access device, where the logical functional entity manages at least one non-cellular network access device that includes the non-cellular network access device; and
performing, by the cellular network access device, the following step for each non-cellular network access device managed by the logical functional entity:
   determining a key identifier corresponding to an identifier of each non-cellular network access device; and
   performing, by the cellular network access device, the following step for each non-cellular network access device managed by the logical functional entity:
      determining a key identifier corresponding to an identifier of each non-cellular network access device; and
      the sending, by the cellular network access device, the determined key identifier to the UE and the non-cellular network access device includes:
         sending, by the cellular network access device to a non-cellular network access device corresponding to the identifier of each non-cellular network access device, the determined key identifier corresponding to each non-cellular network access device, and sending a key identifier list to the UE, where the key identifier list includes the identifier of each non-cellular network access device managed by the logical functional entity and the key identifier corresponding to each non-cellular network access device.

With reference to the first aspect, in a second possible implementation of the first aspect, the determining, by a cellular network access device, a key identifier includes:
determining, by the cellular network access device, a logical functional entity managing the non-cellular network access device, where the logical functional entity manages at least one non-cellular network access device that includes the non-cellular network access device; and
determining, by the cellular network access device, a key identifier for the at least one non-cellular network access device, where key identifiers corresponding to identifiers of all non-cellular network access devices in the at least one non-cellular network access device are the same, and the key identifier is used to perform security authentication between the UE and a non-cellular network access device corresponding to an identifier of the non-cellular network access device; and
the sending, by the cellular network access device, the determined key identifier to the UE and the non-cellular network access device includes:
   separately sending, by the cellular network access device, the determined key identifier to the UE and a non-cellular network access device corresponding to an identifier of each non-cellular network access device.

With reference to any one of the first aspect, or the first or the second possible implementation of the first aspect, in a third possible implementation of the first aspect, the method further includes:
determining, by the cellular network access device, a key, where the key is used to perform security authentication between the UE and the non-cellular network access device; and
the sending, by the cellular network access device, the determined key identifier to the UE and the non-cellular network access device includes:
   sending, by the cellular network access device, the key and the key identifier to the UE and the non-cellular network access device after associating the key with the key identifier.

With reference to any one of the first aspect, or the first or the second possible implementation of the first aspect, in a fourth possible implementation of the first aspect, the method further includes:
determining, by the cellular network access device, a key based on a predetermined derivation rule, where the key is used to perform security authentication between the UE and the non-cellular network access device, and the predetermined derivation rule is the same as a derivation rule used by the UE to determine a key for association of the UE with the non-cellular network access device; and
the sending, by the cellular network access device, the determined key identifier to the UE and the non-cellular network access device includes:
   sending, by the cellular network access device, the key and the key identifier to the non-cellular network access device after associating the key with the key identifier, and sending the key identifier to the UE.

With reference to any one of the first to the fourth possible implementations of the first aspect, in a fifth possible implementation of the first aspect, the method further includes:
sending, by the cellular network access device, at least one of the following to the UE and/or the non-cellular network access device:
a lifetime or authentication manner indication information, where
the lifetime is used to indicate validity periods of the key and the key identifier, and the authentication manner indication information is used to indicate an authentication type used by the UE.

According to a second aspect, an embodiment of the present invention further provides an access authentication method, including:
receiving, by user equipment UE, a key identifier sent by a cellular network access device, where the key identifier is used to instruct the UE to perform security authentication with a non-cellular network access device based on a key corresponding to the key identifier;
determining, by the UE, the key corresponding to the key identifier; and
performing, by the UE, security authentication with the non-cellular network access device according to the received key identifier and the determined key.

With reference to the second aspect, in a first possible implementation of the second aspect, the determining, by the UE, the key corresponding to the key identifier includes:
receiving, by the UE, the key that is corresponding to the key identifier and that is sent by the cellular network access device; or
determining, by the UE by negotiating with the cellular network access device, the key corresponding to the key identifier; or
determining, by the UE according to a predetermined derivation rule, the key corresponding to the key identifier.

With reference to the second aspect or the first possible implementation of the second aspect, in a second possible implementation of the second aspect, the receiving, by UE, a key identifier sent by a cellular network access device includes:
receiving, by the UE, a key identifier list sent by the cellular network access device, where the key identifier list includes an identifier of each non-cellular network access device to be selected by the UE for association, and a key identifier corresponding to each non-cellular network access device; and
the performing, by the UE, security authentication with the non-cellular network access device according to the received key identifier and the determined key includes:
   performing, by the UE, security authentication with a target non-cellular network access device according to the determined key and a key identifier that is corresponding to an identifier of the target non-cellular network access device and that is in the key identifier list, where the target non-cellular network access device is determined by the UE or the cellular network access device.

According to a third aspect, an embodiment of the present invention further provides an access authentication method, including:
receiving, by a non-cellular network access device, a key identifier sent by a cellular network access device, where the key identifier is used to instruct the non-cellular network access device to perform security authentication with user equipment UE associated with the non-cellular network access device; and
when receiving an association request, which is initiated by the UE, for association with the non-cellular network access device, performing, by the non-cellular network access device, security authentication with the UE based on a key corresponding to the key identifier.

According to a fourth aspect, an embodiment of the present invention further provides an access authentication apparatus, including:
a determining unit, configured to determine a key identifier; and
a sending unit, configured to separately send the key identifier determined by the determining unit to user equipment UE and a non-cellular network access device, where the key identifier is used to instruct the UE to perform security authentication with the non-cellular network access device based on a key corresponding to the key identifier.

With reference to the fourth aspect, in a first possible implementation of the fourth aspect, the determining unit is specifically configured to: determine a logical functional entity managing the non-cellular network access device, where the logical functional entity manages at least one non-cellular network access device that includes the non-cellular network access device; and perform the following step for each non-cellular network access device managed by the logical functional entity: determining a key identifier corresponding to an identifier of each non-cellular network access device; and
the sending unit is specifically configured to: send, to a non-cellular network access device corresponding to the identifier of each non-cellular network access device, the key identifier that is determined by the determining unit and that is corresponding to each non-cellular network access device, and send a key identifier list to the UE, where the key identifier list includes the identifier of each non-cellular network access device managed by the logical functional entity and the key identifier corresponding to each non-cellular network access device.

With reference to the fourth aspect, in a second possible implementation of the fourth aspect, the determining unit is specifically configured to: determine a logical functional entity managing the non-cellular network access device, where the logical functional entity manages at least one non-cellular network access device that includes the non-cellular network access device; and determine a key identifier for the at least one non-cellular network access device, where key identifiers corresponding to identifiers of all non-cellular network access devices in the at least one non-cellular network access device are the same, and the key identifier is used to perform security authentication between the UE and a non-cellular network access device corresponding to an identifier of the non-cellular network access device; and

the sending unit is specifically configured to separately send the key identifier determined by the determining unit to the UE and a non-cellular network access device corresponding to an identifier of each non-cellular network access device.

With reference to any one of the fourth aspect, or the first or the second possible implementation of the fourth aspect, in a third possible implementation of the fourth aspect, the determining unit is further configured to determine a key, and the key is used to perform security authentication between the UE and the non-cellular network access device; and

the sending unit is specifically configured to send the key determined by the determining unit and the key identifier to the UE and the non-cellular network access device after associating the key with the key identifier.

With reference to any one of the fourth aspect, or the first or the second possible implementation of the fourth aspect, in a fourth possible implementation of the fourth aspect, the determining unit is further configured to determine a key based on a predetermined derivation rule, the key is used to perform security authentication between the UE and the non-cellular network access device, and the predetermined derivation rule is the same as a derivation rule used by the UE to determine a key for association of the UE with the non-cellular network access device; and

the sending unit is specifically configured to: send the key determined by the determining unit and the key identifier to the non-cellular network access device after associating the key with the key identifier, and send the key identifier to the UE.

With reference to any one of the first to the fourth possible implementations of the fourth aspect, in a fifth possible implementation of the fourth aspect, the sending unit is further configured to send at least one of the following to the UE and/or the non-cellular network access device:
a lifetime or authentication manner indication information, where
the lifetime is used to indicate validity periods of the key and the key identifier, and the authentication manner indication information is used to indicate an authentication type used by the UE.

According to a fifth aspect, an embodiment of the present invention further provides an access authentication apparatus, including:
a receiving unit, a determining unit, and an authentication unit, where
the receiving unit is configured to receive a key identifier sent by a cellular network access device, and the key identifier is used to instruct the authentication unit to perform security authentication with a non-cellular network access device based on a key corresponding to the key identifier;
the determining unit is configured to determine the key corresponding to the key identifier received by the receiving unit; and
the authentication unit is configured to perform security authentication with the non-cellular network access device according to the key identifier received by the receiving unit and the key determined by the determining unit.

With reference to the fifth aspect, in a first possible implementation of the fifth aspect, the determining unit is specifically configured to:
when the receiving unit receives the key that is corresponding to the key identifier and that is sent by the cellular network access device, determine the key corresponding to the key identifier; or
determine, by negotiating with the cellular network access device, the key corresponding to the key identifier; or
determine, according to a predetermined derivation rule, the key corresponding to the key identifier.

With reference to the fifth aspect or the first possible implementation of the fifth aspect, in a second possible implementation of the fifth aspect, the receiving unit is specifically configured to receive a key identifier list sent by the cellular network access device, and the key identifier list includes an identifier of each non-cellular network access device to be selected by the UE for association, and a key identifier corresponding to each non-cellular network access device;
the determining unit is further configured to determine a target non-cellular network access device; and
the authentication unit is specifically configured to perform security authentication with the target non-cellular network access device according to the determined key and a key identifier that is corresponding to an identifier of the target non-cellular network access device and that is in the key identifier list, and the target non-cellular network access device is determined by the determining unit or the cellular network access device.

According to a sixth aspect, an embodiment of the present invention further provides an access authentication apparatus, including:
a receiving unit and an authentication unit, where
the receiving unit is configured to receive a key identifier sent by a cellular network access device, and the key identifier is used to instruct the authentication unit to perform security authentication with user equipment UE associated with the access authentication apparatus; and
the authentication unit is configured to: when the receiving unit receives an association request, which is initiated by the UE, for association with a non-cellular network access device to which the authentication unit belongs, perform security authentication with the UE based on a key corresponding to the key identifier.

According to a seventh aspect, an embodiment of the present invention further provides an access authentication system, including:
a cellular network access device, user equipment UE, and at least one non-cellular network access device, where
the cellular network access device determines a key identifier, where the key identifier is used to instruct the UE to perform, based on a key corresponding to the key identifier, security authentication with one non-cellular network access device in the at least one non-cellular network access device; and separately sends the key identifier to the UE and the non-cellular network access device;
the UE is configured to: receive the key identifier sent by the cellular network access device, and perform security authentication with the non-cellular network access device based on the key corresponding to the key identifier; and
the non-cellular network access device is configured to: receive the key identifier sent by the cellular network access device, and perform security authentication with the UE based on the key corresponding to the key identifier.

With reference to the seventh aspect, in a first possible implementation of the seventh aspect, the system further includes a logical functional entity, configured to manage the at least one non-cellular network access device;
the cellular network access device is specifically configured to: determine the logical functional entity managing the non-cellular network access device; perform the following step for each non-cellular network access device managed by the logical functional entity: determining a key identifier corresponding to an identifier of each non-cellular network access device; and send, to a non-cellular network access device corresponding to the identifier of each non-cellular network access device, the determined key identifier corresponding to each non-cellular network access device, and send a key identifier list to the UE, where the key identifier list includes the identifier of each non-cellular network access device managed by the logical functional entity and the key identifier corresponding to each non-cellular network access device; and
the UE is specifically configured to: when receiving the key identifier sent by the cellular network access device, receive the key identifier list sent by the cellular network access device; and when performing security authentication with the non-cellular network access device based on the key corresponding to the key identifier, perform security authentication with a target non-cellular network access device according to a determined key and a key identifier that is corresponding to an identifier of the target non-cellular network access device and that is in the key identifier list, and the target non-cellular network access device is determined by the UE or the cellular network access device.

With reference to the seventh aspect, in a second possible implementation of the seventh aspect, the system further includes a logical functional entity, configured to manage the at least one non-cellular network access device;
the cellular network access device is specifically configured to: determine the logical functional entity managing the non-cellular network access device; determine a key identifier for the at least one non-cellular network access device, where key identifiers corresponding to identifiers of all non-cellular network access devices in the at least one non-cellular network access device are the same, and the key identifier is used to perform security authentication between the UE and a non-cellular network access device corresponding to an identifier of the non-cellular network access device; and separately send the determined key identifier to the UE and a non-cellular network access device corresponding to an identifier of each non-cellular network access device; and
the UE is specifically configured to: when performing security authentication with the non-cellular network access device based on the key corresponding to the key identifier, perform security authentication with a target non-cellular network access device according to a determined key and a key identifier corresponding to an identifier of the target non-cellular network access device, and the target non-cellular network access device is determined by the UE or the cellular network access device.

With reference to any one of the seventh aspect, or the first or the second possible implementation of the seventh aspect, in a third possible implementation of the seventh aspect, the cellular network access device is further configured to: determine a key, where the key is used to perform security authentication between the UE and the non-cellular network access device; and when sending the determined key identifier to the UE and the non-cellular network access device, send the key and the key identifier to the UE and the non-cellular network access device after associating the key with the key identifier; and
the UE is specifically configured to: receive the key identifier and the key corresponding to the key identifier that are sent by the non-cellular network access device, and perform security authentication with the non-cellular network access device according to the received key identifier and key.

With reference to any one of the seventh aspect, or the first or the second possible implementation of the seventh aspect, in a fourth possible implementation of the seventh aspect, the cellular network access device is further configured to: determine a key based on a predetermined derivation rule, where the key is used to perform security authentication between the UE and the non-cellular network access device; and when sending the determined key identifier to the UE and the non-cellular network access device, send the key and the key identifier to the non-cellular network access device after associating the key with the key identifier, and send the key identifier to the UE; and
when receiving the key identifier sent by the non-cellular network access device, the UE determines a key based on the predetermined derivation rule, and performs security authentication with the non-cellular network access device based on the key identifier and the determined key.

With reference to any one of the seventh aspect, or the first to the fourth possible implementations of the seventh aspect, in a fifth possible implementation of the seventh aspect, the cellular network access device is further configured to send at least one of the following to the UE and/or the non-cellular network access device:
a lifetime or authentication manner indication information, where
the lifetime is used to indicate validity periods of the key and the key identifier, and the authentication manner indication information is used to indicate an authentication type used by the UE.

According to the solution provided in this embodiment of the present invention, a cellular network access device determines a key identifier, and then the cellular network access device directly sends the determined key identifier to UE and a non-cellular network access device. Both the UE and the non-cellular network access device obtain the key identifier. Therefore, the UE and the non-cellular network access device directly perform security authentication by using a key corresponding to the key identifier, so that an authentication time is short, and signaling overheads are low.

According to an eighth aspect, an embodiment of the present invention provides an access authentication method, including:
determining, by a cellular network access device, a key for a non-cellular network access device, where the key is used to perform security authentication between user equipment UE and the non-cellular network access device, and a manner of determining a key by the cellular network access device is the same as a manner of determining a key by the UE; and
sending, by the cellular network access device, the determined key to the non-cellular network access device.

With reference to the eighth aspect, in a first possible implementation of the eighth aspect, the determining, by a cellular network access device, a key for a non-cellular network access device includes:
deriving, by the cellular network access device, the key for the non-cellular network access device based on a key shared with the UE, where a derivation rule used to derive the key is pre-configured and is the same as a derivation rule that is pre-configured in the UE and that is used to derive a key.

With reference to the eighth aspect, in a second possible implementation of the eighth aspect, the determining, by a cellular network access device, a key for a non-cellular network access device includes:
deriving, by the cellular network access device, the key for the non-cellular network access device based on a key shared with the UE; and
the method further includes:
   sending, by the cellular network access device to the UE, a derivation rule used to derive the key, where the derivation rule is used by the UE to derive a key to perform security authentication with the non-cellular network access device.

With reference to any one of the eighth aspect, or the first or the second possible implementation of the eighth aspect, in a third possible implementation of the eighth aspect, the determining, by a cellular network access device, a key for a non-cellular network access device includes:
determining, by the cellular network access device, a logical functional entity managing the non-cellular network access device, where the logical functional entity manages at least one non-cellular network access device that includes the non-cellular network access device; and
performing, by the cellular network access device, the following step for each non-cellular network access device managed by the logical functional entity:
   determining a key corresponding to an identifier of each non-cellular network access device; and
   the sending, by the cellular network access device, the determined key to the non-cellular network access device includes:
      sending, by the cellular network access device to a non-cellular network access device corresponding to the identifier of each non-cellular network access device, the determined key corresponding to each non-cellular network access device.

With reference to any one of the eighth aspect, or the first or the second possible implementation of the eighth aspect, in a fourth possible implementation of the eighth aspect, the determining, by a cellular network access device, a key for a non-cellular network access device includes:
determining, by the cellular network access device, a logical functional entity managing the non-cellular network access device, where the logical functional entity manages at least one non-cellular network access device that includes the non-cellular network access device; and
determining, by the cellular network access device, a key for the at least one non-cellular network access device, where keys corresponding to identifiers of all non-cellular network access devices in the at least one non-cellular network access device are the same, and the key is used to perform security authentication between the UE and a non-cellular network access device corresponding to an identifier of the non-cellular network access device.

With reference to any one of the eighth aspect, or the first or the second possible implementation of the eighth aspect, in a fifth possible implementation of the eighth aspect, the determining, by a cellular network access device, a key for a non-cellular network access device includes:
determining, by the cellular network access device, a logical functional entity managing the non-cellular network access device, where the logical functional entity manages at least one non-cellular network access device that includes the non-cellular network access device, and the at least one non-cellular network access device is included in at least one non-cellular network access device group; and
determining, by the cellular network access device, a key for each non-cellular network access device group, where keys corresponding to identifiers of all non-cellular network access devices included in each non-cellular network access device group are the same, and the key is used to perform security authentication between the UE and a non-cellular network access device corresponding to an identifier of the non-cellular network access device.

With reference to any one of the eighth aspect, or the first to the fifth possible implementations of the eighth aspect, in a sixth possible implementation of the eighth aspect, the method further includes:
after determining the key for the non-cellular network access device, determining, by the cellular network access device, a key identifier corresponding to the key; and sending the key identifier to the non-cellular network access device.

According to a ninth aspect, an embodiment of the present invention provides an access authentication method, and the method includes:
determining, by user equipment UE, a key, where the key is used to perform security authentication between the UE and a non-cellular network access device;
determining, by the UE, a key identifier corresponding to the key; and
performing, by the UE, security authentication with the non-cellular network access device by using the key and the key identifier.

With reference to the ninth aspect, in a first possible implementation of the ninth aspect, the determining, by UE, a key includes:
deriving, by the UE based on a key shared with a cellular network access device, the key by using a derivation rule, where
the derivation rule is sent by the cellular network access device, or the derivation rule is pre-configured in the UE and is the same as a derivation rule used by the cellular network access device to derive a key for the non-cellular network access device.

According to a tenth aspect, an embodiment of the present invention provides an access authentication method, and the method includes:
receiving, by a non-cellular network access device, a key sent by a cellular network access device, where the key is used to instruct the non-cellular network access device to perform security authentication with user equipment UE associated with the non-cellular network access device;
determining, by the non-cellular network access device, a key identifier corresponding to the key; and
performing, by the non-cellular network access device, security authentication with the UE by using the key identifier and the key.

With reference to the tenth aspect, in a first possible implementation of the tenth aspect, the determining, by the non-cellular network access device, a key identifier corresponding to the key includes:
receiving, by the non-cellular network access device, the key identifier that is corresponding to the key and that is sent by the cellular network access device.

According to an eleventh aspect, an embodiment of the present invention provides an access authentication apparatus, and the apparatus is applied to a cellular network access device and includes:
a processing unit, configured to determine a key for a non-cellular network access device, where the key is used to perform security authentication between user equipment UE and the non-cellular network access device, and a manner of determining a key by the processing unit is the same as a manner of determining a key by the UE; and
a transceiver unit, configured to send the key determined by the processing unit to the non-cellular network access device.

With reference to the eleventh aspect, in a first possible implementation of the eleventh aspect, the processing unit is specifically configured to derive the key for the non-cellular network access device based on a key shared with the UE, and a derivation rule used to derive the key is pre-configured and is the same as a derivation rule that is pre-configured in the UE and that is used to derive a key.

With reference to the eleventh aspect, in a second possible implementation of the eleventh aspect, the processing unit is specifically configured to derive the key for the non-cellular network access device based on a key shared with the UE; and
the transceiver unit is further configured to send, to the UE, a derivation rule used to derive the key, and the derivation rule is used by the UE to derive a key to perform security authentication with the non-cellular network access device.

With reference to any one of the eleventh aspect, or the first or the second possible implementation of the eleventh aspect, in a third possible implementation of the eleventh aspect, the processing unit is specifically configured to:
determine a logical functional entity managing the non-cellular network access device, where the logical functional entity manages at least one non-cellular network access device that includes the non-cellular network access device; and
perform the following step for each non-cellular network access device managed by the logical functional entity: determining a key corresponding to an identifier of each non-cellular network access device; and
when sending the key determined by the processing unit to the non-cellular network access device, the transceiver unit is specifically configured to:
   send, to a non-cellular network access device corresponding to the identifier of each non-cellular network access device, the key that is determined by the processing unit and that is corresponding to each non-cellular network access device.

With reference to any one of the eleventh aspect, or the first or the second possible implementation of the eleventh aspect, in a fourth possible implementation of the eleventh aspect, the processing unit is specifically configured to:
determine a logical functional entity managing the non-cellular network access device, where the logical functional entity manages at least one non-cellular network access device that includes the non-cellular network access device; and
determine a key for the at least one non-cellular network access device, where keys corresponding to identifiers of all non-cellular network access devices in the at least one non-cellular network access device are the same, and the key is used to perform security authentication between the UE and a non-cellular network access device corresponding to an identifier of the non-cellular network access device.

With reference to any one of the eleventh aspect, or the first or the second possible implementation of the eleventh aspect, in a fifth possible implementation of the eleventh aspect, the processing unit is specifically configured to:
determine a logical functional entity managing the non-cellular network access device, where the logical functional entity manages at least one non-cellular network access device that includes the non-cellular network access device, and the at least one non-cellular network access device is included in at least one non-cellular network access device group; and
determine a key for each non-cellular network access device group, where keys corresponding to identifiers of all non-cellular network access devices included in each non-cellular network access device group are the same, and the key is used to perform security authentication between the UE and a non-cellular network access device corresponding to an identifier of the non-cellular network access device.

With reference to any one of the eleventh aspect, or the first to the fifth possible implementations of the eleventh aspect, in a sixth possible implementation of the eleventh aspect, the processing unit is further configured to: after determining the key for the non-cellular network access device, determine a key identifier corresponding to the key; and
the transceiver unit is further configured to send the key identifier determined by the processing unit to the non-cellular network access device.

According to a twelfth aspect, an embodiment of the present invention provides an access authentication apparatus, and the apparatus is applied to user equipment UE and includes:
a determining unit, configured to: determine a key, where the key is used to perform security authentication between the UE and a non-cellular network access device; and determine a key identifier corresponding to the key; and
an authentication unit, configured to perform security authentication with the non-cellular network access device by using the key and the key identifier.

With reference to the twelfth aspect, in a first possible implementation of the twelfth aspect, when determining the key, the determining unit is specifically configured to derive, based on a key shared with a cellular network access device, the key by using a derivation rule, where
the derivation rule is sent by the cellular network access device, or the derivation rule is pre-configured in the UE and is the same as a derivation rule used by the cellular network access device to derive a key for the non-cellular network access device.

According to a thirteenth aspect, an embodiment of the present invention provides an access authentication apparatus, and the apparatus is applied to a non-cellular network access device and includes:
a transceiver unit, configured to receive a key sent by a cellular network access device, where the key is used to instruct the non-cellular network access device to perform security authentication with user equipment UE associated with the non-cellular network access device; and
a processing unit, configured to: determine a key identifier corresponding to the key, and perform security authentication with the UE by using the key identifier and the key.

With reference to the thirteenth aspect, in a first possible implementation of the thirteenth aspect, the transceiver unit is further configured to receive the key identifier that is corresponding to the key and that is sent by the cellular network access device.

### BRIEF DESCRIPTION OF DRAWINGS

FIG. 1 is a flowchart of an access authentication method according to an embodiment of the present invention;
FIG. 2 is a flowchart of another access authentication method according to an embodiment of the present invention;
FIG. 3 is a flowchart of still another access authentication method according to an embodiment of the present invention;
FIG. 4A and FIG. 4B are schematic structural diagrams of an offloading and aggregation network system according to an embodiment of the present invention;
FIG. 5 is a schematic diagram of an access authentication method according to an embodiment of the present invention;
FIG. 6 is a schematic diagram of another access authentication method according to an embodiment of the present invention;
FIG. 7 is a schematic diagram of an access authentication apparatus according to an embodiment of the present invention;
FIG. 8 is a schematic diagram of another access authentication apparatus according to an embodiment of the present invention;
FIG. 9 is a schematic diagram of still another access authentication apparatus according to an embodiment of the present invention;
FIG. 10 is a schematic structural diagram of a cellular network access device according to an embodiment of the present invention;
FIG. 11 is a schematic structural diagram of user equipment according to an embodiment of the present invention;
FIG. 12 is a schematic structural diagram of a non-cellular network access device according to an embodiment of the present invention;
FIG. 13 is a schematic structural diagram of an access authentication system according to an embodiment of the present invention;
FIG. 14 is a flowchart of an access authentication method executed by a cellular network access device according to an embodiment of the present invention;
FIG. 15 is a flowchart of an access authentication method executed by UE according to an embodiment of the present invention;
FIG. 16 is a flowchart of an access authentication method executed by a non-cellular network access device according to an embodiment of the present invention;
FIG. 17 is a schematic diagram of an access authentication method according to an embodiment of the present invention;
FIG. 18 is a schematic diagram of an access authentication apparatus applied to a cellular network access device according to an embodiment of the present invention;
FIG. 19 is a schematic diagram of an access authentication apparatus applied to UE according to an embodiment of the present invention;
FIG. 20 is a schematic diagram of an access authentication apparatus applied to a non-cellular network access device according to an embodiment of the present invention;
FIG. 21 is a schematic diagram of an access authentication device applied to a cellular network access device according to an embodiment of the present invention;
FIG. 22 is a schematic diagram of an access authentication device applied to UE according to an embodiment of the present invention; and
FIG. 23 is a schematic diagram of an access authentication device applied to a non-cellular network access device according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely some rather than all of the embodiments of the present invention. All other embodiments obtained by persons of ordinary skill in the art based on the embodiments of the present invention without creative efforts shall fall within the protection scope of the present invention.

The embodiments of the present invention provide an access authentication method and apparatus, so as to resolve prior art problems of a relatively long authentication time and high signaling overheads. Because problem-resolving principles of the method and the apparatus are the same, mutual reference may be made to method embodiments and apparatus embodiments, and repeated description is not provided.

First, some terms provided in this specification are explained for ease of understanding by persons skilled in the art.

### (1) "Cellular network" and "cellular network access device"

The "cellular network" may include but is not limited to a cellular network in any one of the following systems: a Long Term Evolution (Long Term Evolution, LTE for short) system, or a Global System for Mobile Communications (Global System for Mobile Communications, GSM for short), a Code Division Multiple Access (Code Division Multiple Access, CDMA for short) system, a Time Division Multiple Access (Time Division Multiple Access, TDMA for short) system, a Wideband Code Division Multiple Access (Wideband Code Division Multiple Access Wireless, WCDMA for short) system, a Frequency Division Multiple Access (Frequency Division Multiple Address, FDMA for short) system, an orthogonal frequency-division multiple Access (Orthogonal Frequency-Division Multiple Access, OFDMA for short) system, a single carrier FDMA (SC-FDMA) system, a general packet radio service (General Packet Radio Service, GPRS for short) system, or a Universal Mobile Telecommunications System (Universal Mobile Telecommunications System, UMTS for short) that is related to 3GPP protocols.

The "cellular network access device" may be a base station device such as an eNB in an LTE system, a BTS (Base Transceiver Station, base transceiver station) in a GSM or a CDMA system, or a NodeB (NodeB) in a WCDMA system, or may be a control node such as an SRC (Single RAN Coordinator, single RAN coordinator) in an LTE system, or an RNC (Radio Network Controller, radio network controller) in a UMTS.

### (2) "Non-cellular network" and "non-cellular network access device"

The "non-cellular network" may include but is not limited to either of the following: a WLAN or a Worldwide Interoperability for Microwave Access (Worldwide Interoperability for Microwave Access, WIMAX for short) network.

The "non-cellular network access device" may be an access point (Access Point, AP for short) or an access controller (Access Controller, AC for short) in a WLAN, or may be a base station (Base Station, BS for short) in a WIMAX network.

In the embodiments of the present invention, when the non-cellular network is a WLAN, the "non-cellular network access device" may specifically have an autonomous management architecture (that is, a "fat" AP architecture) or a centralized management architecture (that is, a "fit" AP architecture).

In the autonomous management architecture, a WLAN AP is responsible for tasks such as user equipment access, user equipment disconnection, authority authentication, security policy implementation, data forwarding, data encryption, and network management, and autonomously controls configuration and a wireless function of the WLAN AP. The centralized management architecture is also referred to as a "fit" AP architecture, and management permission is generally centralized on an access controller (Access Controller, AC for short). The AC manages an IP address, authentication, encryption, and the like of user equipment. A WLAN AP has only functions such as encryption, data forwarding, and a radio frequency function, and cannot work independently. The Control And Provisioning of Wireless Access Points (Control And Provisioning of Wireless Access Points, CAPWAP for short) protocol is used between the WLAN AP and the AC. Optionally, the WLAN AP and a base station may be deployed in an integrated manner. For ease of understanding and description, the following uses the autonomous management architecture, that is, the "fat" AP architecture as an example. This is not limited in the present invention.

### (3) Logical functional entity

Generally, a cellular network access device and a non-cellular network access device cannot communicate with each other directly, but communicate with each other by using a logical functional entity. Specifically, the logical functional entity may be a device in a cellular network, or may be a device in a non-cellular network.

Optionally, when the non-cellular network is a WLAN, the logical functional entity may be a device in the WLAN, and may be specifically a WLAN termination (WLAN Termination, WT for short). In the WLAN, the WT and an AP may be disposed together, or the WT and an AC may be disposed together, or the WT may be independent of an AP and an AC.

### (4) Correspondences (or referred to as connection relationships) between an eNB, a WT, an AP, and UE

One eNB may be connected to one or more WTs, that is, one eNB may support one or more WTs. One WT may support one or more AP groups (AP Group). One AP group includes one or more APs. Generally, one WT is connected to one eNB. Specially, a WT located in a common coverage area of multiple eNBs may be connected to the multiple eNBs. One AP may be connected to one or more UEs.

Generally, an eNB directly communicates with a WT, and UE directly communicates with an AP in a non-cellular network.

### (5) Multi-stream aggregation

"Multi-stream aggregation" described in this specification means that some data for communication between a cellular network access device and UE, that is, data for performing multi-stream aggregation, is transmitted by using a non-cellular network access device, and other data for communication between the cellular network access device and the UE, that is, data that is not used for performing multi-stream aggregation, is directly transmitted between the cellular network access device and the UE. The cellular network access device and the non-cellular network access device communicate with each other by using a logical functional entity.

The "multi-stream aggregation" includes downlink multi-stream aggregation and uplink multi-stream aggregation. A cellular network may support only the downlink multi-stream aggregation, or may support only the uplink multi-stream aggregation, or may support both the downlink multi-stream aggregation and the uplink multi-stream aggregation.

### (6) UE

UE in the present invention may include a handheld device, an in-vehicle device, a wearable device, a computing device having a wireless communication function or another processing device connected to a wireless modem, or user equipment in various forms. The user equipment includes but is not limited to a station (Station, STA for short), a mobile station (Mobile Station, MS for short), a subscriber unit (Subscriber unit), a personal computer (Personal Computer, PC for short), a laptop computer (Laptop Computer, LC for short), a tablet computer (Tablet Computer, TC for short), a netbook (Netbook), a terminal (Terminal), a personal digital assistant (Personal Digital Assistant, PDA for short), a mobile WiFi hotspot device (MiFi Devices), a smartwatch, smart glasses, or the like. The UE may be distributed in an entire network. For ease of description, in this application, these devices are referred to as user equipment or UE.

(7) The term "and/or" in this specification describes only an association relationship for describing associated objects and indicates that three relationships may exist. For example, A and/or B may represent the following three cases: Only A exists, both A and B exist, and only B exists. In addition, the character "/" in this specification generally indicates an "or" relationship between the associated objects.

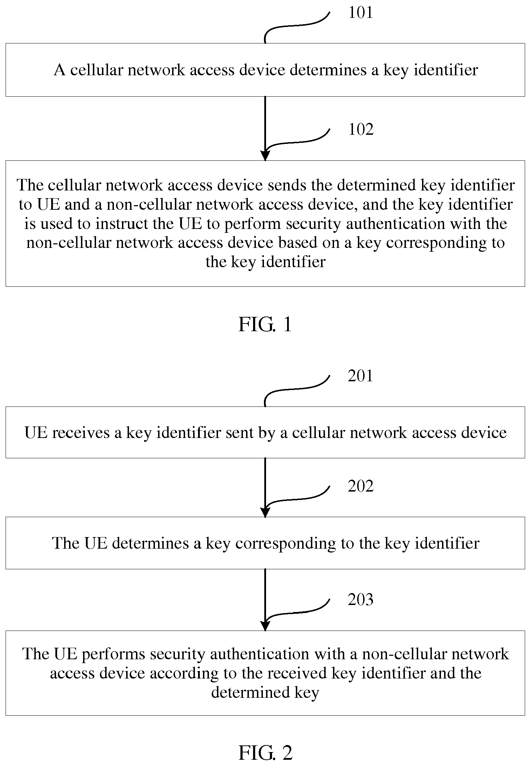

An embodiment of the present invention provides an access authentication method. As shown in FIG. 1, the method includes the following steps.

Step 101: A cellular network access device determines a key identifier.

The key identifier is used to instruct UE to perform security authentication with a non-cellular network access device based on a key corresponding to the key identifier.

The cellular network access device may determine, for the UE, a same key identifier for all non-cellular network access devices managed by a logical functional entity, or may determine, for the UE, a same key identifier for all non-cellular network access devices in each non-cellular network access device group in a logical functional entity, or may determine, for the UE, different key identifiers for all non-cellular network access devices in all non-cellular network access device groups in a logical functional entity.

The key identifier may be determined by the cellular network access device based on an identity of the UE and an identifier of the non-cellular network access device by using a hash (HASH) algorithm. Alternatively, the key identifier may be determined based only on an identity of the UE. Certainly, the key identifier may be determined by using another algorithm, and the algorithm for determining the key identifier is not specifically limited in this embodiment of the present invention.

Step 102: The cellular network access device sends the determined key identifier to UE and a non-cellular network access device, and the key identifier is used to instruct the UE to perform security authentication with the non-cellular network access device based on a key corresponding to the key identifier.

According to the solution provided in this embodiment of the present invention, a cellular network access device determines a key identifier, and then the cellular network access device directly sends the determined key identifier to UE and a non-cellular network access device. Both the UE and the non-cellular network access device obtain the key identifier. Therefore, the UE and the non-cellular network access device directly perform security authentication by using a key corresponding to the key identifier, so that an authentication time is short, and signaling overheads are low.

Optionally, the cellular network access device sends the key identifier to the non-cellular network access device by using a logical functional entity. Specifically, the logical functional entity and the non-cellular network access device communicate with each other by using a private interface. This is not limited in the present invention.

Optionally, when sending the key identifier to the UE, the cellular network access device associates the identifier of the non-cellular network access device with the key identifier and sends the identifier of the non-cellular network access device and the key identifier. Specifically, the identifier of the non-cellular network access device and the key identifier may be sent in a form of a table. Alternatively, the identifier of the non-cellular network access device and the key identifier may be sent separately. For example, if key identifiers determined for all non-cellular network access devices are the same, only one key identifier needs to be sent to the UE.

The cellular network access device sends the key identifier to the non-cellular network access device. When the UE is being associated with the non-cellular network access device, the non-cellular network access device only needs to determine whether a key identifier carried in an association request sent by the UE is the same as the key identifier stored by the non-cellular network access device. When the key identifiers are the same, the UE and the non-cellular network access device perform 4-way handshake authentication by using the key corresponding to the key identifier.

The identifier of the non-cellular network access device may be a service set identifier (Service Set Identifier, SSID for short), or an extended service set identifier (Extended service set Identifier, ESSID for short), or a basic service set identifier (Basic Service Set Identifier, BSSID for short) of the non-cellular network access device. The BSSID of the non-cellular network access device is also a Medium Access Control (Medium Access Control, MAC for short) address of the non-cellular network access device. The identity of the UE may be a WLAN MAC address of the UE.

Specifically, when the cellular network access device sends the key identifier to the UE, the key identifier may be sent independently, or may be included in pairwise master key security association (Pairwise Master Key Security Association, PMKSA for short) information for sending, or may be included in an LWA command message for sending. Alternatively, the key identifier may be included in another newly defined message for sending, and the message is used to instruct the UE to perform LWA.

When the cellular network access device sends the key identifier to the non-cellular network access device, the key identifier may be sent independently. When the logical functional entity and the non-cellular network access device are a same node, the key identifier may be included, for sending, in a GPRS Tunneling Protocol-User Plane (User plane of GPRS Tunneling Protocol, GTP-U for short) tunnel setup message sent by the cellular network access device to the logical functional entity, or may be included in another newly defined message for sending. When the logical functional entity and the non-cellular network access device are not a same node, the cellular network access device adds the key identifier to a GTP-U tunnel setup message, and sends the GTP-U tunnel setup message to the logical functional entity. Then, the logical functional entity sends the GTP-U tunnel setup message to the non-cellular network access device.

Optionally, the cellular network access device may further send at least one of the following to the UE and/or the non-cellular network access device:
a lifetime or authentication manner indication information.

The lifetime is used to indicate validity periods of the key identifier and the key corresponding to the key identifier, and the authentication manner indication information is used to indicate an authentication type (authentication type) used by the UE. The authentication type may be an authentication type specified in the Authentication and Key Management Protocol (Authentication and Key Management Protocol, AKMP for short), for example, an 802.1X EAP-AKA caching manner.

Specifically, at least one of the foregoing information may be included in PMSKA for sending. Alternatively, the key identifier and at least one of the foregoing information may be included in a same message for sending.

Optionally, the key corresponding to the key identifier may be determined in manners including but not limited to the following manners.

### First implementation:

The key corresponding to the key identifier may be determined by the cellular network access device. After determining the key, the cellular network access device sends the key and the key identifier to the UE and the non-cellular network access device after associating the key with the key identifier. Therefore, the key and the key identifier may be included in PMSKA for sending, or may be included in a same message for sending. For a specific message, refer to the foregoing description, and details are not described herein again in this embodiment of the present invention.

The key determined by the cellular network access device may be a key shared by the UE and the cellular network access device, for example, one key of KeNB, KRRCint, KRRCenc, KUPenc, KUPint, or the like, or may be a key derived according to one or more of the foregoing keys.

The key identifier may be determined by the cellular network access device based on the identity of the UE and the identifier of the non-cellular network access device, or may be determined based only on the identity of the UE, or may be determined by using the key, the identity of the UE, and the identifier of the non-cellular network access device, or may be determined by using the key and the identity of the UE.

For example, PMKID=HMAC-SHA1-128(PMK, "PMK_name"|MAC_AP|MAC_UE).

PMKID represents the key identifier, PMK represents the key, PMK_name represents a name of the key, and MAC_UE represents the identity of the UE, that is, the WLAN MAC address of the UE. MAC_AP represents the identifier of the non-cellular network access device, that is, the MAC address of the non-cellular network access device. HMAC is a hash-based message authentication code (Hash-based Message Authentication Code) related to the key. SHA1 is a secure hash algorithm (Secure Hash Algorithm).

### Second implementation:

The key corresponding to the key identifier may be a key that is determined by the cellular network access device and the UE based on a predetermined derivation rule and that is for association of the UE with the non-cellular network access device. Then, the cellular network access device sends the determined key to the non-cellular network access device. The predetermined derivation rule may be predetermined by the UE and the cellular network access device by means of negotiation.

Specifically, the cellular network access device determines, based on the predetermined derivation rule, the key for association of the UE with the non-cellular network access device, and then determines a key identifier corresponding to the key. Then, the cellular network access device sends the key identifier and the key to the non-cellular network access device, and sends the key identifier to the UE. Before being associated with the non-cellular network access device, the UE first determines, according to the predetermined derivation rule, the key corresponding to the key identifier.

The UE adds the key identifier to an association request, and sends the association request to the non-cellular network access device. Then, if the non-cellular network access device determines that the received key identifier sent by the UE is the same as the key identifier stored by the non-cellular network access device, the UE and the non-cellular network access device execute a 4-way handshake procedure based on the key corresponding to the key identifier. After the 4-way handshake authentication succeeds, the cellular network access device may perform multi-stream aggregation data transmission with the UE by using the non-cellular network access device.

### Third implementation:

The cellular network access device derives the key identifier based on a derivation rule by using a key shared by the UE and the cellular network access device. Then, the cellular network access device sends the derivation rule to the UE and the non-cellular network access device, and sends, to the non-cellular network access device, the key shared by the cellular network access device and the UE. After receiving the key identifier, the UE and the non-cellular network access device derive, based on the same derivation rule according to the shared key, keys corresponding to the key identifier. Therefore, the derived keys are the same.

Then, the UE adds the key identifier to an association request, and sends the association request to the non-cellular network access device. Then, if the non-cellular network access device determines that the received key identifier sent by the UE is the same as the key identifier stored by the non-cellular network access device, the UE and the non-cellular network access device execute a 4-way handshake procedure based on the key corresponding to the key identifier. After the 4-way handshake authentication succeeds, the cellular network access device may perform multi-stream aggregation data transmission with the UE by using the non-cellular network access device.

In an embodiment, the non-cellular network access device and the logical functional entity are a same node. That the non-cellular network access device and the logical functional entity are a same node may be that functions of the non-cellular network access device and the logical functional entity are implemented by using one device, or may be that the logical functional entity is built in the non-cellular network access device. If the logical functional entity is built in the non-cellular network access device, there is an internal interface between the logical functional entity and the non-cellular network access device, and the logical functional entity and the non-cellular network access device exchange information by using the internal interface.

The cellular network access device may determine, in the following manner, the key identifier for association of the UE with the non-cellular network access device:
The cellular network access device determines, according to a measurement report sent by the UE, a non-cellular network access device with which the UE needs to be associated. The measurement report includes signal quality of a WLAN in which the UE is located. The cellular network access device selects a non-cellular network access device in a WLAN with relatively high signal quality for the UE.

Specifically, after receiving a measurement configuration request message sent by the cellular network access device, the UE may measure the signal quality of the WLAN in which the UE is located, and send, to the cellular network access device, the measurement report generated from a measurement result.

The cellular network access device determines a key identifier corresponding to the non-cellular network access device selected for the UE. The key identifier is used to instruct the UE to perform security authentication with the non-cellular network access device based on a key corresponding to the key identifier.

For a manner of determining the key corresponding to the key identifier, refer to any one of the first to the third implementations, and details are not described herein again in this embodiment of the present invention.

Then, the cellular network access device sends, to the non-cellular network access device, the determined key identifier corresponding to the non-cellular network access device selected for the UE.

In an embodiment, if the non-cellular network access device and the logical functional entity are not a same node, the cellular network access device may determine, in the following manner, the key identifier for association of the UE with the non-cellular network access device:
The cellular network access device determines a logical functional entity to which a non-cellular network access device to be associated with the UE belongs. The cellular network access device determines each non-cellular network access device managed by the logical functional entity. Then, the cellular network access device performs the following step for each non-cellular network access device: determining a key identifier corresponding to each non-cellular network access device. The key identifier is used to instruct the UE to perform security authentication with the non-cellular network access device based on a key corresponding to the key identifier.

The non-cellular network access device to be associated with the UE is selected by the cellular network access device for the UE. The to-be-associated non-cellular network access device is selected to determine the logical functional entity, so that all the non-cellular network access devices managed by the logical functional entity can be determined. A specific selection manner may be as follows: After receiving a measurement configuration request message sent by the cellular network access device, the UE may measure signal quality of a WLAN in which the UE is located, and send, to the cellular network access device, a measurement report generated from a measurement result. The cellular network access device determines, according to the measurement report sent by the UE, a non-cellular network access device with which the UE needs to be associated. For example, the cellular network access device selects a non-cellular network access device in a WLAN with relatively high signal quality for the UE.

Then, the cellular network access device sends the determined key identifier to the UE and the non-cellular network access device in the following manner:
The cellular network access device sends, by using the logical functional entity to a non-cellular network access device corresponding to an identifier of each non-cellular network access device, the determined key identifier corresponding to each non-cellular network access device, and sends a key identifier list to the UE. The key identifier list includes the identifier of each non-cellular network access device managed by the logical functional entity and the key identifier corresponding to each non-cellular network access device.

Therefore, when the UE is being associated with a non-cellular network access device, a non-cellular network access device is selected, and it is determined whether an identifier of the selected non-cellular network access device is the same as an identifier of a non-cellular network access device in the key identifier list. If the identifiers are the same, the non-cellular network access device is used as a target non-cellular network access device.

In an embodiment, if the non-cellular network access device and the logical functional entity are not a same node, the cellular network access device may determine, in the following manner, the key identifier for association of the UE with the non-cellular network access device:
The cellular network access device determines a non-cellular network access device that is to be associated with the UE, and determines a key identifier corresponding to the non-cellular network access device. The key identifier is used to instruct the UE to perform security authentication with the non-cellular network access device based on a key corresponding to the key identifier.

The non-cellular network access device to be associated with the UE is selected by the cellular network access device for the UE. A specific selection manner may be as follows: After receiving a measurement configuration request message sent by the cellular network access device, the UE may measure signal quality of a WLAN in which the UE is located, and send, to the cellular network access device, a measurement report generated from a measurement result. The cellular network access device determines, according to the measurement report sent by the UE, a non-cellular network access device with which the UE needs to be associated. For example, the cellular network access device selects a non-cellular network access device in a WLAN with relatively high signal quality for the UE.

Then, the cellular network access device sends the determined key identifier to the UE and the non-cellular network access device in the following manner:
The cellular network access device determines a logical functional entity to which the non-cellular network access device belongs. Then, the cellular network access device sends, to the non-cellular network access device by using the logical functional entity, the key identifier corresponding to the non-cellular network access device, and sends, to the UE, the key identifier corresponding to the non-cellular network access device.

Therefore, when being associated with a non-cellular network access device, the UE is associated with a non-cellular network access device indicated by the cellular network access device. The non-cellular network access device indicated by the cellular network access device is the non-cellular network access device corresponding to the foregoing key identifier.

In an embodiment, if the non-cellular network access device and the logical functional entity are not a same node, the cellular network access device may determine, in the following manner, the key identifier for association of the UE with the non-cellular network access device:
The cellular network access device determines a logical functional entity to which a non-cellular network access device to be associated with the UE belongs. The logical functional entity manages at least one non-cellular network access device that includes the to-be-associated non-cellular network access device.

The cellular network access device determines a key identifier for the at least one non-cellular network access device. Key identifiers corresponding to identifiers of all non-cellular network access devices in the at least one non-cellular network access device are the same, and the key identifier is used to perform security authentication between the UE and a non-cellular network access device corresponding to an identifier of the non-cellular network access device.

That the cellular network access device sends the determined key identifier to the UE and the non-cellular network access device includes:
separately sending, by the cellular network access device by using the logical functional entity, the determined key identifier to the UE and a non-cellular network access device corresponding to the identifier of each non-cellular network access device.

An embodiment of the present invention further provides an access authentication method. As shown in FIG. 2, the method includes the following steps.

Step 201: UE receives a key identifier sent by a cellular network access device.

The key identifier is used to instruct the UE to perform security authentication with a non-cellular network access device based on a key corresponding to the key identifier.

Step 202: The UE determines a key corresponding to the key identifier.

Step 203: The UE performs security authentication with a non-cellular network access device according to the received key identifier and the determined key.

Optionally, the UE may determine the key corresponding to the key identifier in manners including but not limited to the following manners.

### First implementation:

The UE receives the key that is corresponding to the key identifier and that is sent by the cellular network access device.

Specifically, at the same time when the cellular network access device sends the key identifier, the cellular network access device sends the key corresponding to the key identifier. Certainly, the key and the key identifier may be sent separately. This is not specifically limited in this embodiment of the present invention.

### Second implementation:

The UE determines, by negotiating with the cellular network access device, the key corresponding to the key identifier.

Specifically, when receiving the key identifier sent by the cellular network access device, the UE may negotiate with the cellular network access device to obtain a manner of determining the key corresponding to the key identifier. Then, the UE determines, based on the determining manner, the key corresponding to the key identifier. Alternatively, the UE obtains a derivation rule for determining the key corresponding to the key identifier. Then, the UE determines, based on the derivation rule, the key corresponding to the key identifier.

### Third implementation:

The UE determines, according to a predetermined derivation rule, the key corresponding to the key identifier.

The predetermined derivation rule may be sent by the cellular network access device in advance. Alternatively, the UE negotiates with the cellular network access device in advance to obtain the derivation rule, and then the UE stores the derivation rule. The predetermined derivation rule is the same as a derivation rule used by the cellular network access device to determine the key corresponding to the key identifier for the UE. After deriving the key according to the predetermined derivation rule, the cellular network access device sends the obtained key to the non-cellular network access device.

Therefore, when the UE sends, to the non-cellular network access device, an association request carrying the key identifier, the non-cellular network access device determines whether the received key identifier is the same as a key identifier stored by the non-cellular network access device. If the key identifiers are the same, the UE and the non-cellular network access device perform 4-way handshake authentication based on the key corresponding to the key identifier.

Optionally, that the UE receives the key identifier that is sent by the cellular network access device and that is used by the UE for association with the non-cellular network access device includes:
receiving, by the UE, a key identifier list sent by the cellular network access device, where the key identifier list includes an identifier of each non-cellular network access device to be selected by the UE for association, and a key identifier corresponding to each non-cellular network access device.

The identifier of each non-cellular network access device is an identifier of a non-cellular network access device that is in a non-cellular network access device group and that is indicated by the cellular network access device.

That the UE performs security authentication with the non-cellular network access device based on the key corresponding to the received key identifier includes:
determining, by the UE, that the key identifier list includes an identifier of a target non-cellular network access device; and
performing, by the UE, security authentication with the target non-cellular network access device according to a key identifier corresponding to the identifier that is of the target non-cellular network access device and that is in the key identifier list, and a key corresponding to the key identifier.

Optionally, the UE receives a key identifier sent by the cellular network access device, and the key identifier is corresponding to identifiers of multiple non-cellular network access devices. An identifier of each non-cellular network access device is an identifier of a non-cellular network access device that is in a non-cellular network access device group and that is indicated by the cellular network access device.

The UE determines that the identifiers of the multiple non-cellular network access devices include an identifier of a target non-cellular network access device.

The UE performs security authentication with the target non-cellular network access device according to a key identifier corresponding to the identifier of the target non-cellular network access device, and a key corresponding to the key identifier.

Optionally, the UE receives a key identifier sent by the cellular network access device, and the key identifier is corresponding to an identifier of one non-cellular network access device. The UE determines that the non-cellular network access device is a target non-cellular network access device.

The UE performs security authentication with the target non-cellular network access device according to a key identifier corresponding to an identifier of the target non-cellular network access device, and a key corresponding to the key identifier.

According to the solution provided in this embodiment of the present invention, UE receives a key identifier sent by a cellular network access device. Then, the UE determines a key corresponding to the key identifier. The UE directly performs security authentication with a non-cellular network access device according to the received key identifier and the determined key, so that an authentication time is short, and signaling overheads are low.

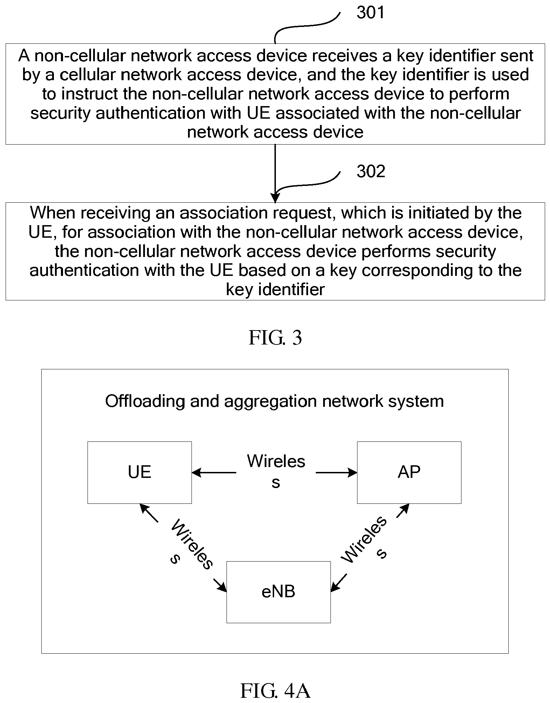

An embodiment of the present invention further provides an access authentication method. As shown in FIG. 3, the method includes the following steps.

Step 301: A non-cellular network access device receives a key identifier sent by a cellular network access device, and the key identifier is used to instruct the non-cellular network access device to perform security authentication with UE associated with the non-cellular network access device.

Step 302: When receiving an association request, which is initiated by the UE, for association with the non-cellular network access device, the non-cellular network access device performs security authentication with the UE based on a key corresponding to the key identifier.

Specifically, the UE adds a key identifier to the association request, and sends the association request to the non-cellular network access device. Then, if the non-cellular network access device determines that the received key identifier sent by the UE is the same as the key identifier stored by the non-cellular network access device, the UE and the non-cellular network access device execute a 4-way handshake procedure based on the key corresponding to the key identifier. After the 4-way handshake authentication succeeds, the cellular network access device may perform multi-stream aggregation data transmission with the UE by using the non-cellular network access device.

According to the solution provided in this embodiment of the present invention, a non-cellular network access device receives a key identifier sent by a cellular network access device, the key identifier is used to instruct the authentication unit to perform security authentication with user equipment UE associated with the non-cellular network access device, and the key identifier is used to instruct the user equipment UE to perform security authentication with the non-cellular network access device based on a key corresponding to the key identifier. Both the UE and the non-cellular network access device obtain the key identifier. Therefore, the UE and the non-cellular network access device directly perform security authentication by using the key corresponding to the key identifier, so that an authentication time is short, and signaling overheads are low.

The following specifically describes the embodiments of the present invention with reference to an instance. In the following instance, an example in which a cellular network is an LTE network, a cellular network access device is an eNB, a non-cellular network is a WLAN, a non-cellular network access device is an AP, and a logical functional entity is a WT is used for description.

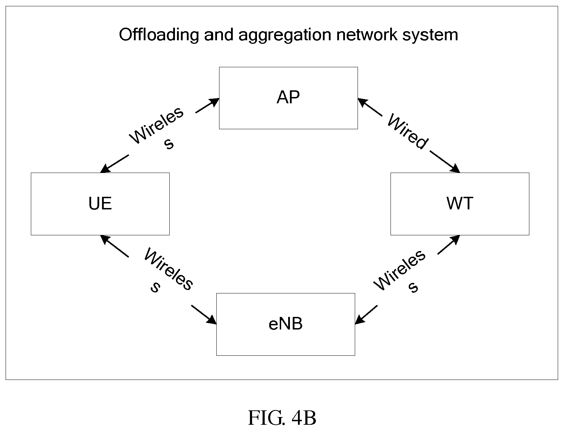

Referring to FIG. 4A and FIG. 4B, FIG. 4A and FIG. 4B are schematic structural diagrams of an offloading and aggregation network system according to an embodiment of the present invention. In this embodiment, an AP supports and assists in LTE data transmission. In addition, the network system in this embodiment of the present invention may further include a WT used to manage the AP. As shown in FIG. 4A, the WT and the AP may be a same node. Alternatively, as shown in FIG. 4B, the WT and the AP may be different nodes. UE, an eNB, and the WT may be connected in a wireless manner, for example, communicate by using an air interface. If the WT and the AP are different nodes, the WT and the AP are connected in a wired manner.

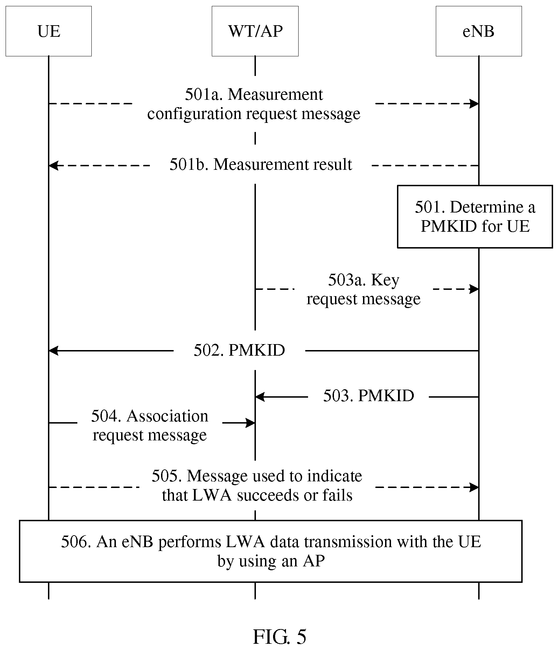

Referring to FIG. 5, FIG. 5 is a schematic diagram of an access authentication method according to an embodiment of the present invention. Optional steps in FIG. 5 are indicated by using dashed lines.

Step 501: An eNB determines a PMKID for UE.

The PMKID is a key identifier. The PMKID is used by the UE and an AP to perform security authentication according to a PMK corresponding to the PMKID.

Step 502: The eNB sends the PMKID to the UE.

The PMKID may be sent independently, or may be included in PMKSA information for sending. Alternatively, the PMKID may be included, for sending, in an LWA command message delivered by the eNB to the UE, or may be included in another newly defined message for sending. The message may be carried in a radio resource control (Radio Resource Control, RRC for short) connection reconfiguration message, and used to instruct the UE to perform LWA. After RRC connection reconfiguration is completed, an RRC connection reconfiguration completion message is sent to the eNB.

In addition to the PMKID, an LWA request message may further include an identifier of the WLAN AP or an identifier of a WLAN AP group. The identifier of the AP may be a BSSID/ESSID/SSID. The identifier of the AP group includes a WLAN AP identifier list, and the identifier of the AP may be a BSSID/ESSID/SSID.

The PMKSA information may be included in the LWA command message for sending, or may be included in another newly defined message for sending.

In this embodiment of the present invention, an example in which the PMKID is included in the PMKSA information, and the PMKSA information is included in the LWA command message for sending is used for description.

The PMKSA information includes the PMKID, and may further include the following.
(1) A MAC address of the AP/the AP group.
(2) A PMK. The PMK is a key used by the eNB to assist in WLAN authentication. The PMK may be a key shared by the eNB and the UE, for example, one key of KeNB, KRRCint, KRRCenc, KUPenc, KUPint, or the like, or may be a key derived according to one or more of the foregoing keys. The PMK is optional.

If the PMKSA information does not include the PMK, the eNB may send, to the UE in advance, a derivation rule for deriving a key, or the eNB and the UE agree to use the shared key as the PMK.
(3) A lifetime (lifetime), used to indicate a validity period of the PMKID and a validity period of the PMK. The lifetime is optional.
(4) Authentication manner indication information. The authentication manner indication information is used to indicate an authentication type used by the UE. The authentication type may be an authentication type specified in the AKMP, for example, an 802.1X EAP-AKA caching manner.
(5) A WLAN MAC address of the UE.

The PMKID may be determined by the eNB based on an identity of the UE. The identity of the UE may be the WLAN MAC address of the UE. The PMKID may be determined based on the identifier of the AP and the identity of the UE, or may be determined based only on the identity of the UE, or may be determined by using the key PMK, the identity of the UE, and the identifier of the AP, or may be determined by using the key PMK and the identity of the UE. When the PMKID is determined based on the identity of the UE, the eNB maintains a counter (counter) for each UE, to ensure that PMKIDs of all the UEs are different.

For example, PMKID=HMAC-SHA1-128(PMK, "PMK_name"|MAC_AP|MAC_UE).

PMK_name represents a name of the key, and MAC_UE represents the identity of the UE, that is, the WLAN MAC address of the UE. MAC_AP represents the identifier of the AP, that is, the MAC address of the AP. HMAC is a hash-based message authentication code (Hash-based Message Authentication Code) related to the key. SHA1 is a secure hash algorithm (Secure Hash Algorithm).

Optionally, before step 501, the method may further include: obtaining, by the eNB, the identity of the UE, for example, the WLAN MAC address of the UE. Specifically, the eNB may actively request the UE to report the identity, or the identity is carried in a UE capability report message.

Optionally, before step 501, the method may further include the following steps.

Step 501a: The eNB sends a measurement configuration request message to the UE.

The measurement configuration request message is used to request the UE to measure signal quality of a WLAN in which the UE is located. The UE measures the signal quality of the WLAN, and obtains a measurement result.

Step 501b: The UE reports a measurement result to the eNB.

The measurement result includes an identifier of an AP in the WLAN, and a signal quality value corresponding to the identifier of the AP.

Therefore, the eNB determines, according to the measurement result, a WT for performing LWA data transmission. Specifically, according to the measurement result, an AP providing a strongest signal may be selected as an AP that is to be associated with the UE. Then, a WT to which the AP belongs is determined, and the WT is used as the WT for performing LWA data transmission.

In step 501, the eNB may determine, for the UE, a same key identifier for all APs in the WT, or may determine, for the UE, a same key identifier for all APs in each AP group in the WT, or may determine, for the UE, different key identifiers for all APs in all AP groups in the WT. In addition, when key identifiers are the same, keys are also the same. When key identifiers are different, keys are also different.

Step 503: The eNB sends the PMKID to a WT.

The WT may send the PMKID to the AP by using a private interface between the WT and the AP.

The PMKID may be sent independently, or may be included in a GTP-U tunnel setup message and sent to the WT. If the PMKID is sent by using the GTP-U tunnel setup message, step 503 needs to be implemented before step 502. If the PMKID is sent in another manner, a sequence for implementing step 503 and step 502 is not limited.

In addition, the PMK corresponding to the PMKID may further be sent to the WT. The key may also be included in the GTP-U tunnel setup message and sent to the WT.

The PMK is a key used by the eNB to assist in WLAN authentication. The PMK may be a key shared by the eNB and the UE, for example, one key of KeNB, KRRCint, KRRCenc, KUPenc, KUPint, or the like, or may be a key derived according to one or more of the foregoing keys.

Optionally, before step 503, the method may further include the following step.

Step 503a: The WT sends a key request message to the eNB, and the key request message is used to request to obtain a key and the PMKID.

A time sequence between step 503a and each of step 501 and step 502 is not limited. FIG. 5 is used only as an example, and is not intended to limit the time sequence.

Then, in step 503, the eNB may add the PMKID and a key derivation rule or the PMKID and the PMK to a key request response message and send the key request response message to the WT.

Certainly, the eNB may actively send the PMKID and the key derivation rule, or the PMKID and the PMK to the WT.

Step 504: The UE sends an association request message to a WLAN AP, and the association request message carries the PMKID.

Specifically, if the eNB indicates an identifier list of an AP group to the UE, the UE autonomously selects an AP from the AP group for access. If the eNB indicates an identifier of an AP to the UE, the UE directly accesses the indicated AP.

Before association with the WLAN AP, the UE first determines whether there is a PMK of a valid target AP, that is, checks whether a BSSID of an AP in the PMKSA information matches a BSSID of the to-be-associated AP. If the BSSIDs match, a PMK corresponding to the BSSID of the AP is used. After the PMKID is included in the association request message, and the WLAN AP receives the PMKID included in the association request message, the AP checks whether a PMKID the same as the PMKID included in the association request message exists in the PMKSA information. If such a PMKID exists, the UE and the AP use the PMK to perform 4-way handshake authentication.

Optionally, the method may further include the following step.

Step 505: The UE sends, to the eNB, a message used to indicate that LWA succeeds or fails.

When the eNB receives an LWA success message sent by the UE, the method further includes the following step.

Step 506: The eNB performs LWA data transmission with the UE by using the AP.

According to the solution provided in this embodiment of the present invention, an eNB determines a key identifier. Then, the eNB directly sends the determined key identifier to UE and an AP. Both the UE and the AP obtain the key identifier. Therefore, the UE and the AP directly perform security authentication by using a key corresponding to the key identifier, so that an authentication time is short, and signaling overheads are low.

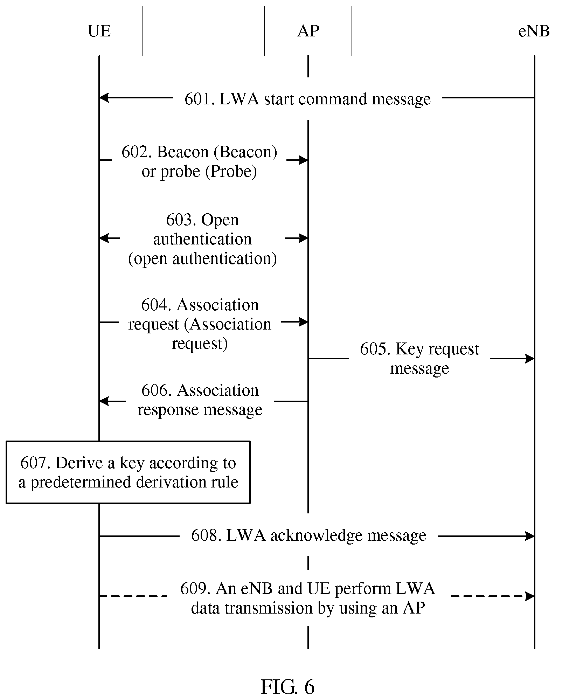

Referring to FIG. 6, FIG. 6 is a schematic diagram of another access authentication method according to an embodiment of the present invention.

Step 601: An eNB delivers an LWA start command message to UE.

For example, the LWA start command message may be an active AP message, used to instruct the UE to access an AP. The LWA start command message may include a BSSID of a WLAN AP. The LWA start command message may further include a security policy of the UE. The security policy is of an LWA type, and the LWA type is a newly added authentication type.

Before step 601, the eNB may instruct the UE to measure and report WLAN signal quality. The eNB determines, according to a measurement report result sent by the UE, to add an appropriate WLAN to perform LWA data transmission. Generally, the eNB determines, according to cellular network load and/or subscription information of the UE, whether to instruct the UE to measure and report the WLAN signal quality.

Step 602: The UE discovers a designated AP by listening to a beacon (beacon) frame or sending a probe (Probe) frame.

The AP adds a robust security network (Robust Security Network, RSN for short) information element to a beacon or probe acknowledgement (Acknowledgement, ACK for short) frame. The RSN information element indicates a security policy supported by the designated AP, and the security policy is of the newly added authentication type: the LWA type.

The RSN information element includes an automatic key management (Automatic Key Management, AKM for short) information element, and the AKM information element is used to indicate an authentication type.

Before step 602, the eNB may further send indication information to the AP by using an Xw interface between the eNB and the WLAN, and the indication information is used to indicate that an MSA type is used as an only authentication type.

Step 603: The UE and the AP start an authentication process (open authentication).

Step 604: The UE initiates an association request (Association request) message to the AP.

The association request message includes a security policy expected by the UE. For example, an authentication type is the LWA type. In this way, the UE and the AP complete negotiation on the security policy.

Step 605: The AP sends a key request message to the eNB.

After receiving the key request message, the eNB derives a new key according to a key on an access network side and a predetermined derivation rule, and sends the derived key to the AP by using a response message.

Step 606: The AP returns an association response message to the UE.

The UE and the AP complete association.

Step 607: The UE derives a key according to a predetermined derivation rule after receiving the association response message from the AP.

Then, the UE and the AP complete WLAN 4-way handshake security authentication according to the derived key.

Step 608: The UE sends an LWA acknowledge message to the eNB.

Step 609: The eNB and the UE perform LWA data transmission by using the AP.

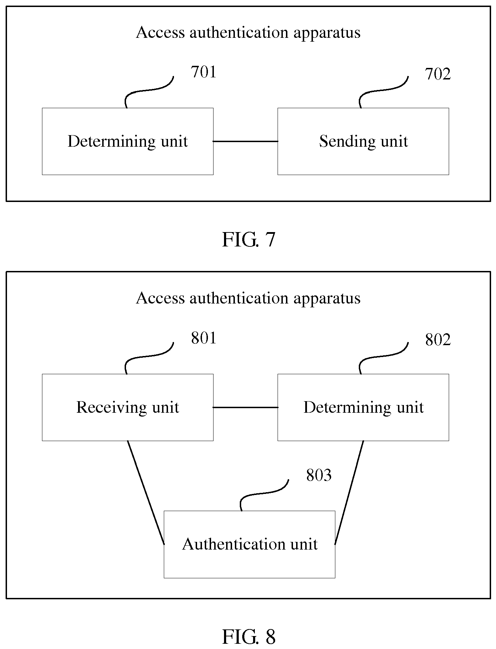

Based on an invention concept the same as that of the method embodiment depicted in FIG. 1, an embodiment of the present invention further provides an access authentication apparatus. The apparatus may be disposed in a cellular network access device, or may be a cellular network access device, or may be an independent apparatus that is different from a cellular network access device but can communicate with a cellular network access device. As shown in FIG. 7, the access authentication apparatus includes:
a determining unit 701, configured to determine a key identifier; and
a sending unit 702, configured to separately send the key identifier determined by the determining unit 701 to UE and a non-cellular network access device, where the key identifier is used to instruct the UE to perform security authentication with the non-cellular network access device based on a key corresponding to the key identifier.

Optionally, the determining unit 701 may determine the key identifier in the following manner:
determining a logical functional entity managing the non-cellular network access device, where the logical functional entity manages at least one non-cellular network access device that includes the non-cellular network access device; and performing the following step for each non-cellular network access device managed by the logical functional entity: determining a key identifier corresponding to an identifier of each non-cellular network access device.

The sending unit 702 may specifically separately send the key identifier determined by the determining unit 701 to the UE and the non-cellular network access device in the following manner. The manner includes: sending, to a non-cellular network access device corresponding to the identifier of each non-cellular network access device, the key identifier that is determined by the determining unit 701 and that is corresponding to each non-cellular network access device, and sending a key identifier list to the UE, where the key identifier list includes the identifier of each non-cellular network access device managed by the logical functional entity and the key identifier corresponding to each non-cellular network access device.

Optionally, the determining unit 701 may determine the key identifier in the following manner:
determining a logical functional entity managing the non-cellular network access device, where the logical functional entity manages at least one non-cellular network access device that includes the non-cellular network access device; and determining a key identifier for the at least one non-cellular network access device, where key identifiers corresponding to identifiers of all non-cellular network access devices in the at least one non-cellular network access device are the same, and the key identifier is used to perform security authentication between the UE and a non-cellular network access device corresponding to an identifier of the non-cellular network access device.

The sending unit 702 separately sends the key identifier determined by the determining unit 701 to the UE and a non-cellular network access device corresponding to an identifier of each non-cellular network access device.

Optionally, the determining unit 701 is further configured to determine a key, and the key is used to perform security authentication between the UE and the non-cellular network access device.

The sending unit 702 sends the key determined by the determining unit 701 and the key identifier to the UE and the non-cellular network access device after associating the key with the key identifier.

Optionally, the determining unit 701 determines a key based on a predetermined derivation rule, the key is used to perform security authentication between the UE and the non-cellular network access device, and the predetermined derivation rule is the same as a derivation rule used by the UE to determine a key for association of the UE with the non-cellular network access device.

The sending unit 702 is specifically configured to: send the key determined by the determining unit 701 and the key identifier to the non-cellular network access device after associating the key with the key identifier, and send the key identifier to the UE.

Optionally, the sending unit 702 is further configured to send at least one of the following to the UE and/or the non-cellular network access device:
a lifetime or authentication manner indication information.

The lifetime is used to indicate validity periods of the key and the key identifier, and the authentication manner indication information is used to indicate an authentication type used by the UE. The authentication type may be an authentication type specified in the AKMP, for example, an 802.1X EAP-AKA caching manner.

It should be noted that the access authentication apparatus and the access authentication method provided in the embodiment depicted in FIG. 1 are based on a same invention concept. Problem-resolving principles of the method and the apparatus are similar. Therefore, mutual reference may be made to implementations of the apparatus and the method, and repeated description is not provided.

According to the solution provided in this embodiment of the present invention, a cellular network access device determines a key identifier, and then the cellular network access device directly sends the determined key identifier to UE and a non-cellular network access device. Both the UE and the non-cellular network access device obtain the key identifier. Therefore, the UE and the non-cellular network access device directly perform security authentication by using a key corresponding to the key identifier, so that an authentication time is short, and signaling overheads are low.

Based on an invention concept the same as that of the method embodiment depicted in FIG. 2, an embodiment of the present invention further provides an access authentication apparatus. The apparatus may be disposed in user equipment, or may be user equipment. As shown in FIG. 8, the apparatus includes:
a receiving unit 801, a determining unit 802, and an authentication unit 803.

The receiving unit 801 is configured to receive a key identifier sent by a cellular network access device, and the key identifier is used to instruct the authentication unit to perform security authentication with a non-cellular network access device based on a key corresponding to the key identifier.

The determining unit 802 is configured to determine the key corresponding to the key identifier received by the receiving unit 801.

The authentication unit 803 is configured to perform security authentication with the non-cellular network access device according to the key identifier received by the receiving unit 801 and the key determined by the determining unit 802.

Optionally, the determining unit 802 is specifically configured to: when the receiving unit 801 receives the key that is corresponding to the key identifier and that is sent by the cellular network access device, determine the key corresponding to the key identifier; or determine, by negotiating with the cellular network access device, the key corresponding to the key identifier; or determine, according to a predetermined derivation rule, the key corresponding to the key identifier.

Optionally, the receiving unit 801 is specifically configured to receive a key identifier list sent by the cellular network access device, and the key identifier list includes an identifier of each non-cellular network access device to be selected by the UE for association, and a key identifier corresponding to each non-cellular network access device.

The determining unit 802 is further configured to determine a target non-cellular network access device.

The authentication unit 803 is specifically configured to perform security authentication with the target non-cellular network access device according to the determined key and a key identifier that is corresponding to an identifier of the target non-cellular network access device and that is in the key identifier list, and the target non-cellular network access device is determined by the determining unit or the cellular network access device.

It should be noted that the access authentication apparatus and the access authentication method provided in the embodiment depicted in FIG. 2 are based on a same invention concept. Problem-resolving principles of the method and the apparatus are similar. Therefore, mutual reference may be made to implementations of the apparatus and the method, and repeated description is not provided.

According to the solution provided in this embodiment of the present invention, UE receives a key identifier sent by a cellular network access device. Then, the UE determines a key corresponding to the key identifier. The UE directly performs security authentication with a non-cellular network access device according to the received key identifier and the determined key, so that an authentication time is short, and signaling overheads are low.

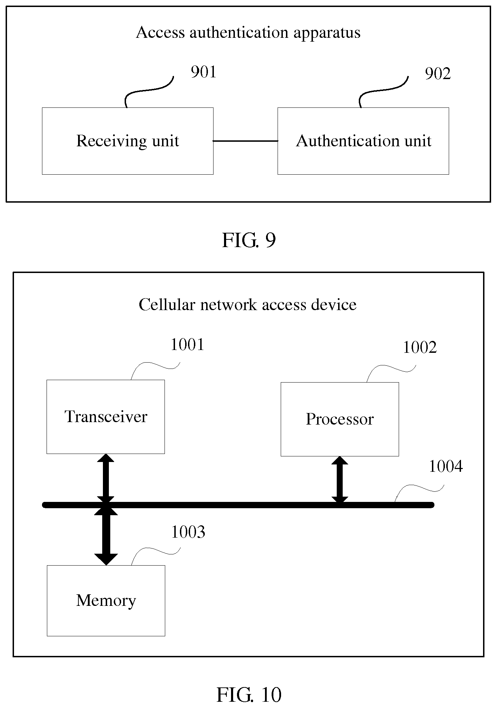

Based on an invention concept the same as that of the method embodiment depicted in FIG. 3, an embodiment of the present invention further provides an access authentication apparatus. The apparatus may be disposed in a non-cellular network access device, or may be a non-cellular network access device, or may be an independent device that can communicate with a non-cellular network access device. As shown in FIG. 9, the apparatus includes:
a receiving unit 901 and an authentication unit 902.

The receiving unit 901 is configured to receive a key identifier sent by a cellular network access device, and the key identifier is used to instruct the authentication unit to perform security authentication with user equipment UE associated with the access authentication apparatus.

The authentication unit 902 is configured to: when the receiving unit 901 receives an association request, which is initiated by the UE, for association with a non-cellular network access device to which the authentication unit belongs, perform security authentication with the UE based on a key corresponding to the key identifier.

It should be noted that the access authentication apparatus and the access authentication method provided in the embodiment depicted in FIG. 3 are based on a same invention concept. Problem-resolving principles of the method and the apparatus are similar. Therefore, mutual reference may be made to implementations of the apparatus and the method, and repeated description is not provided.

According to the solution provided in this embodiment of the present invention, a receiving unit receives a key identifier sent by a cellular network access device, the key identifier is used to instruct an authentication unit to perform security authentication with UE associated with an access authentication apparatus, and the key identifier is used to instruct the UE to perform, based on a key corresponding to the key identifier, security authentication with the access authentication apparatus to which the authentication unit belongs. Both the UE and the access authentication apparatus obtain the key identifier. Therefore, the UE and the access authentication apparatus directly perform security authentication by using the key corresponding to the key identifier, so that an authentication time is short, and signaling overheads are low.

Based on an invention concept the same as that of the method embodiment depicted in FIG. 1, an embodiment of the present invention further provides a cellular network access device. As shown in FIG. 10, the device includes a transceiver 1001, a processor 1002, and a memory 1003. The transceiver 1001, the processor 1002, and the memory 1003 are connected to each other. A specific connection medium between the foregoing components is not limited in this embodiment of the present invention. In this embodiment of the present invention, in FIG. 10, the memory 1003, the processor 1002, and the transceiver 1001 are connected to each other by using a bus 1004. The bus is represented by using a thick line in FIG. 10. A manner of connection between other components is only an example, and is not limited. The bus may be classified into an address bus, a data bus, a control bus, or the like. For ease of representation, only one thick line is used in FIG. 10 for representation, but it does not indicate that there is only one bus or one type of bus.

The memory 1003 in this embodiment of the present invention is configured to store program code executed by the processor 1002, and may be a volatile memory (volatile memory) such as a random-access memory (random-access memory, RAM for short). Alternatively, the memory 1003 may be a non-volatile memory (non-volatile memory) such as a read-only memory (read-only memory, ROM for short), a flash memory (flash memory), a hard disk drive (hard disk drive, HDD for short), or a solid-state drive (solid-state drive, SSD for short). Alternatively, the memory 1003 is any other medium that can be used to carry or store expected program code in a command or data structure form and that can be accessed by a computer. However, this is not limited. The memory 1003 may be a combination of the foregoing memories.

The processor 1002 in this embodiment of the present invention may be a central processing unit (central processing unit, CPU for short).

The processor 1002 determines a key identifier. Then, the transceiver 1001 is configured to separately send the key identifier determined by the processor 1002 to UE and a non-cellular network access device. The key identifier is used to instruct the UE to perform security authentication with the non-cellular network access device based on a key corresponding to the key identifier.

Optionally, the processor 1002 may determine the key identifier in the following manner:
determining a logical functional entity managing the non-cellular network access device, where the logical functional entity manages at least one non-cellular network access device that includes the non-cellular network access device; and performing the following step for each non-cellular network access device managed by the logical functional entity: determining a key identifier corresponding to an identifier of each non-cellular network access device.

The transceiver 1001 may specifically separately send the key identifier determined by the processor 1002 to the UE and the non-cellular network access device in the following manner. The manner includes: sending, to a non-cellular network access device corresponding to the identifier of each non-cellular network access device, the key identifier that is determined by the processor 1002 and that is corresponding to each non-cellular network access device, and sending a key identifier list to the UE, where the key identifier list includes the identifier of each non-cellular network access device managed by the logical functional entity and the key identifier corresponding to each non-cellular network access device.

Optionally, the processor 1002 may determine the key identifier in the following manner:
determining a logical functional entity managing the non-cellular network access device, where the logical functional entity manages at least one non-cellular network access device that includes the non-cellular network access device; and determining a key identifier for the at least one non-cellular network access device, where key identifiers corresponding to identifiers of all non-cellular network access devices in the at least one non-cellular network access device are the same, and the key identifier is used to perform security authentication between the UE and a non-cellular network access device corresponding to an identifier of the non-cellular network access device.

The transceiver 1001 separately sends the key identifier determined by the processor 1002 to the UE and a non-cellular network access device corresponding to an identifier of each non-cellular network access device.

Optionally, the processor 1002 is further configured to determine a key, and the key is used to perform security authentication between the UE and the non-cellular network access device.

The transceiver 1001 sends the key determined by the processor 1002 and the key identifier to the UE and the non-cellular network access device after associating the key with the key identifier.

Optionally, the processor 1002 determines a key based on a predetermined derivation rule, the key is used to perform security authentication between the UE and the non-cellular network access device, and the predetermined derivation rule is the same as a derivation rule used by the UE to determine a key for association of the UE with the non-cellular network access device.

The transceiver 1001 is specifically configured to: send the key determined by the processor 1002 and the key identifier to the non-cellular network access device after associating the key with the key identifier, and send the key identifier to the UE.

Optionally, the processor 1002 is further configured to send at least one of the following to the UE and/or the non-cellular network access device:
a lifetime or authentication manner indication information.

The lifetime is used to indicate validity periods of the key and the key identifier, and the authentication manner indication information is used to indicate an authentication type used by the UE. The authentication type may be an authentication type specified in the Authentication and Key Management Protocol, for example, an 802.1X EAP-AKA caching manner.

It should be noted that the cellular network access device, the access authentication method provided in the embodiment depicted in FIG. 1, and the access authentication apparatus shown in FIG. 7 are based on a same invention concept. Problem-resolving principles of the method, the apparatus, and the device are similar. Therefore, mutual reference may be made to implementations of the device, the apparatus, and the method, and repeated description is not provided.

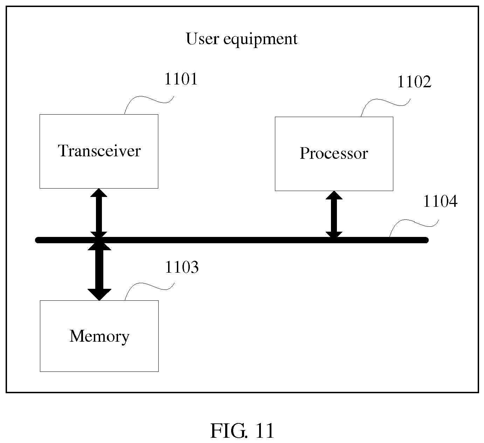

Based on an invention concept the same as that of the method embodiment depicted in FIG. 2, an embodiment of the present invention further provides user equipment. As shown in FIG. 11, the user equipment includes a transceiver 1101, a processor 1102, and a memory 1103. The transceiver 1101, the processor 1102, and the memory 1103 are connected to each other. A specific connection medium between the foregoing components is not limited in this embodiment of the present invention. In this embodiment of the present invention, in FIG. 11, the memory 1103, the processor 1102, and the transceiver 1101 are connected to each other by using a bus 1104. The bus is represented by using a thick line in FIG. 11. A manner of connection between other components is only an example, and is not limited. The bus may be classified into an address bus, a data bus, a control bus, or the like. For ease of representation, only one thick line is used in FIG. 11 for representation, but it does not indicate that there is only one bus or one type of bus.

The memory 1103 in this embodiment of the present invention is configured to store program code executed by the processor 1102, and may be a volatile memory such as a random-access memory. Alternatively, the memory 1103 may be a non-volatile memory such as a read-only memory, a flash memory, a hard disk drive, or a solid-state drive. Alternatively, the memory 1103 is any other medium that can be used to carry or store expected program code in a command or data structure form and that can be accessed by a computer. However, this is not limited. The memory 1103 may be a combination of the foregoing memories.

The processor 1102 in this embodiment of the present invention may be a CPU.

The transceiver 1101 is configured to receive a key identifier sent by a cellular network access device, and the key identifier is used to instruct the processor 1102 to perform security authentication with a non-cellular network access device based on a key corresponding to the key identifier.

The processor 1102 is configured to: determine the key corresponding to the key identifier received by the transceiver 1101, and perform security authentication with the non-cellular network access device according to the key identifier received by the transceiver 1101 and the key determined by the processor 1102.

Optionally, the processor 1102 is specifically configured to: when the transceiver 1101 receives the key that is corresponding to the key identifier and that is sent by the cellular network access device, determine the key corresponding to the key identifier; or determine, by negotiating with the cellular network access device, the key corresponding to the key identifier; or determine, according to a predetermined derivation rule, the key corresponding to the key identifier.

Optionally, the transceiver 1101 is specifically configured to receive a key identifier list sent by the cellular network access device, and the key identifier list includes an identifier of each non-cellular network access device to be selected by the UE for association, and a key identifier corresponding to each non-cellular network access device.

The processor 1102 is further configured to: determine a target non-cellular network access device, and perform security authentication with the target non-cellular network access device according to the determined key and a key identifier that is corresponding to an identifier of the target non-cellular network access device and that is in the key identifier list, and the target non-cellular network access device is determined by the processor 1102 or the cellular network access device.

It should be noted that the user equipment, the access authentication method provided in the embodiment depicted in FIG. 2, and the access authentication apparatus shown in FIG. 8 are based on a same invention concept. Problem-resolving principles of the method, the apparatus, and the user equipment are similar. Therefore, mutual reference may be made to implementations of the user equipment, the apparatus, and the method, and repeated description is not provided.

According to the solution provided in this embodiment of the present invention, UE receives a key identifier sent by a cellular network access device. Then, the UE determines a key corresponding to the key identifier. The UE directly performs security authentication with a non-cellular network access device according to the received key identifier and the determined key, so that an authentication time is short, and signaling overheads are low.

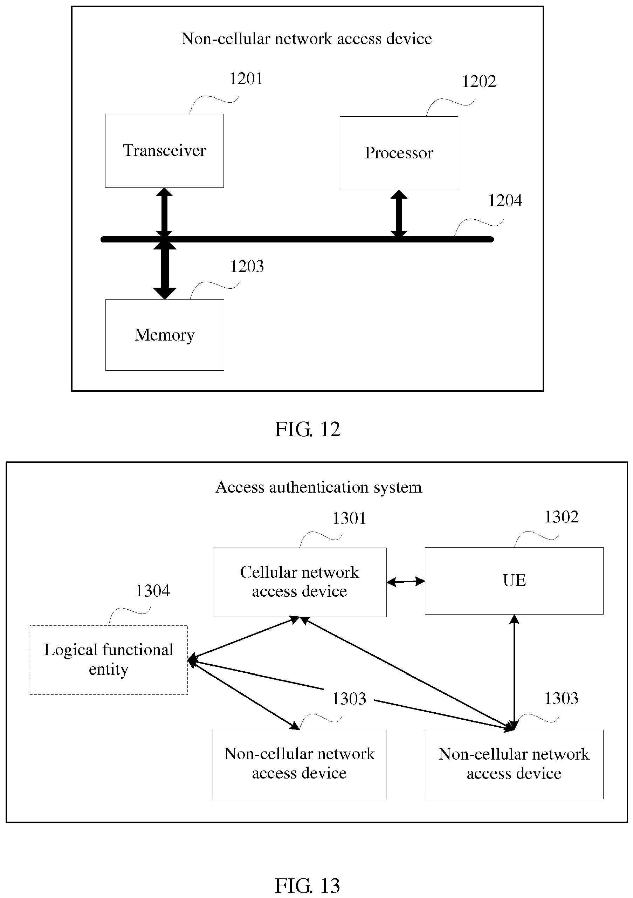

Based on an invention concept the same as that of the method embodiment depicted in FIG. 3, an embodiment of the present invention further provides a non-cellular network access device. As shown in FIG. 12, the device includes a transceiver 1201, a processor 1202, and a memory 1203. The transceiver 1201, the processor 1202, and the memory 1203 are connected to each other. A specific connection medium between the foregoing components is not limited in this embodiment of the present invention. In this embodiment of the present invention, in FIG. 12, the memory 1203, the processor 1202, and the transceiver 1201 are connected to each other by using a bus 1204. The bus is represented by using a thick line in FIG. 12. A manner of connection between other components is only an example, and is not limited. The bus may be classified into an address bus, a data bus, a control bus, or the like. For ease of representation, only one thick line is used in FIG. 12 for representation, but it does not indicate that there is only one bus or one type of bus.

The memory 1203 in this embodiment of the present invention is configured to store program code executed by the processor 1202, and may be a volatile memory such as a RAM. Alternatively, the memory 1203 may be a non-volatile memory such as a ROM, a flash memory, an HDD, or an SSD. Alternatively, the memory 1203 is any other medium that can be used to carry or store expected program code in a command or data structure form and that can be accessed by a computer. However, this is not limited. The memory 1203 may be a combination of the foregoing memories.

The processor 1202 in this embodiment of the present invention may be a CPU.

The transceiver 1201 is configured to receive a key identifier sent by a cellular network access device, and the key identifier is used to instruct the processor 1102 to perform security authentication with user equipment UE associated with the non-cellular network access device.

The processor 1202 is configured to: when the transceiver 1201 receives an association request, which is initiated by the UE, for association with the non-cellular network access device to which the authentication unit belongs, perform security authentication with the UE based on a key corresponding to the key identifier.

It should be noted that the non-cellular network access device, the access authentication method provided in the embodiment depicted in FIG. 3, and the access authentication apparatus shown in FIG. 9 are based on a same invention concept. Problem-resolving principles of the method, the apparatus, and the device are similar. Therefore, mutual reference may be made to implementations of the device, the apparatus, and the method, and repeated description is not provided.

According to the solution provided in this embodiment of the present invention, a non-cellular network access device receives a key identifier sent by a cellular network access device, the key identifier is used to instruct the authentication unit to perform security authentication with user equipment UE associated with the non-cellular network access device, and the key identifier is used to instruct the user equipment UE to perform security authentication with the non-cellular network access device based on a key corresponding to the key identifier. Both the UE and the non-cellular network access device obtain the key identifier. Therefore, the UE and the non-cellular network access device directly perform security authentication by using the key corresponding to the key identifier, so that an authentication time is short, and signaling overheads are low.

Referring to FIG. 13, an embodiment of the present invention provides an access authentication system. The system includes:
a cellular network access device 1301, UE 1302, and at least one non-cellular network access device 1303. The cellular network access device 1301, the UE 1302, and the at least one non-cellular network access device 1303 may be connected to each other in a wireless manner. An example in which the system shown in FIG. 13 includes two non-cellular network access devices is used for description. FIG. 13 is only an example, and a quantity of devices, structures of the devices, and the like are not specifically limited.

The cellular network access device 1301 determines a key identifier. The key identifier is used to instruct the UE to perform, based on a key corresponding to the key identifier, security authentication with one non-cellular network access device 1303 in the at least one non-cellular network access device. The cellular network access device 1301 separately sends the key identifier to the UE and the non-cellular network access device 1303.

The UE 1302 is configured to: receive the key identifier sent by the cellular network access device 1301, and perform security authentication with the non-cellular network access device 1303 based on the key corresponding to the key identifier.

The non-cellular network access device 1303 is configured to: receive the key identifier sent by the cellular network access device 1301, and perform security authentication with the UE 1302 based on the key corresponding to the key identifier.

In an optional embodiment, as shown in FIG. 13, the system may further include a logical functional entity 1304, configured to manage the at least one non-cellular network access device, for example, the two non-cellular network access devices 1303 shown in FIG. 13.

The cellular network access device 1301 is specifically configured to: determine the logical functional entity 1304 managing the non-cellular network access device 1303; perform the following step for each non-cellular network access device 1303 managed by the logical functional entity 1304: determining a key identifier corresponding to an identifier of each non-cellular network access device 1303; and send, to a non-cellular network access device 1303 corresponding to the identifier of each non-cellular network access device 1303, the determined key identifier corresponding to each non-cellular network access device 1303, and send a key identifier list to the UE, where the key identifier list includes the identifier of each non-cellular network access device 1303 managed by the logical functional entity 1304 and the key identifier corresponding to each non-cellular network access device 1303.

The UE 1302 is specifically configured to: when receiving the key identifier sent by the cellular network access device 1301, receive the key identifier list sent by the cellular network access device 1301; and when performing security authentication with the non-cellular network access device 1303 based on the key corresponding to the key identifier, perform security authentication with a target non-cellular network access device according to the determined key and a key identifier that is corresponding to an identifier of the target non-cellular network access device and that is in the key identifier list, and the target non-cellular network access device is determined by the UE 1302 or the cellular network access device 1301.

In another optional embodiment, as shown in FIG. 13, the system may further include a logical functional entity 1304, configured to manage the at least one non-cellular network access device.

The cellular network access device 1301 is specifically configured to: determine the logical functional entity 1304 managing the non-cellular network access device 1303; determine a key identifier for the at least one non-cellular network access device 1303, where key identifiers corresponding to identifiers of all non-cellular network access devices 1303 in the at least one non-cellular network access device 1303 are the same, and the key identifier is used to perform security authentication between the UE 1302 and a non-cellular network access device 1303 corresponding to an identifier of the non-cellular network access device 1303; and separately send the determined key identifier to the UE 1302 and a non-cellular network access device 1303 corresponding to an identifier of each non-cellular network access device 1303.

The UE 1302 is specifically configured to: when performing security authentication with the non-cellular network access device 1303 based on the key corresponding to the key identifier, perform security authentication with a target non-cellular network access device according to the determined key and a key identifier corresponding to an identifier of the target non-cellular network access device, and the target non-cellular network access device is determined by the UE 1302 or the cellular network access device 1301.

Optionally, the cellular network access device 1301 is further configured to: determine a key, where the key is used to perform security authentication between the UE 1302 and the non-cellular network access device 1303; and when sending the determined key identifier to the UE 1302 and the non-cellular network access device 1303, send the key and the key identifier to the UE 1302 and the non-cellular network access device 1303 after associating the key with the key identifier.

The UE 1302 is specifically configured to: receive the key identifier and the key corresponding to the key identifier that are sent by the non-cellular network access device 1303, and perform security authentication with the non-cellular network access device 1303 according to the received key identifier and key.

Optionally, the cellular network access device 1301 is further configured to: determine a key based on a predetermined derivation rule, where the key is used to perform security authentication between the UE 1302 and the non-cellular network access device 1303; and when sending the determined key identifier to the UE 1302 and the non-cellular network access device 1303, send the key and the key identifier to the non-cellular network access device 1303 after associating the key with the key identifier, and send the key identifier to the UE 1302.

When receiving the key identifier sent by the non-cellular network access device 1303, the UE 1302 determines a key based on the predetermined derivation rule, and performs security authentication with the non-cellular network access device 1303 based on the key identifier and the determined key.

The cellular network access device 1301 is further configured to send at least one of the following to the UE 1302 and/or the non-cellular network access device 1303:
a lifetime or authentication manner indication information.

The lifetime is used to indicate validity periods of the key and the key identifier, and the authentication manner indication information is used to indicate an authentication type used by the UE 1302. The authentication type may be an authentication type specified in the Authentication and Key Management Protocol, for example, an 802.1X EAP-AKA caching manner.

A non-cellular network access device receives a key identifier sent by a cellular network access device, the key identifier is used to instruct the authentication unit to perform security authentication with user equipment UE associated with the non-cellular network access device, and the key identifier is used to instruct the user equipment UE to perform security authentication with the non-cellular network access device based on a key corresponding to the key identifier. Both the UE and the non-cellular network access device obtain the key identifier. Therefore, the UE and the non-cellular network access device directly perform security authentication by using the key corresponding to the key identifier, so that an authentication time is short, and signaling overheads are low.

The cellular network access device 1301 included in the access authentication system provided in this embodiment of the present invention may be the cellular network access device provided in the embodiment corresponding to FIG. 7 or FIG. 10. The UE 1302 may be the UE provided in the embodiment corresponding to FIG. 8 or FIG. 11. The non-cellular network access device 1303 may be the non-cellular network access device provided in the embodiment corresponding to FIG. 9 or FIG. 12. Therefore, for a function corresponding to the cellular network access device 1301 in the access authentication system, refer to the embodiment corresponding to FIG. 7 or FIG. 10. For a function corresponding to the UE 1302 in the access authentication system, refer to the embodiment corresponding to FIG. 8 or FIG. 11. For a function corresponding to the non-cellular network access device 1303 in the access authentication system, refer to the embodiment corresponding to FIG. 9 or FIG. 12. No repeated description is provided.

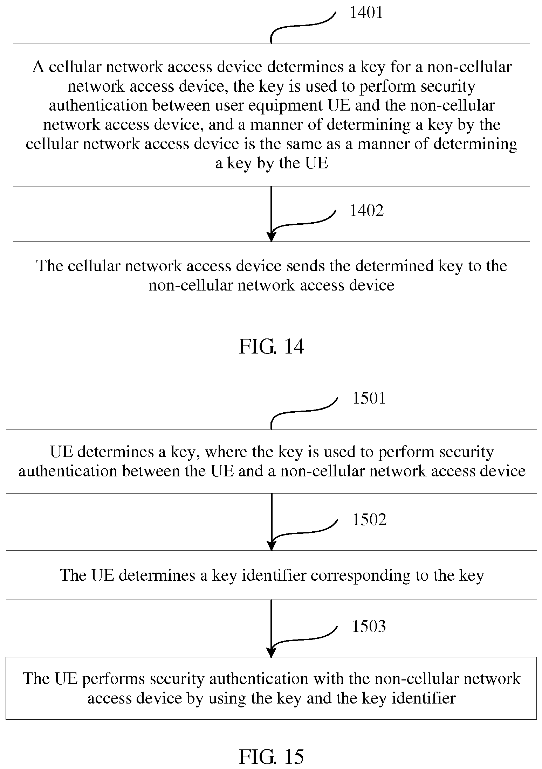

An embodiment of the present invention further provides an access authentication method. As shown in FIG. 14, the method includes the following steps.

Step 1401: A cellular network access device determines a key for a non-cellular network access device, the key is used to perform security authentication between user equipment UE and the non-cellular network access device, and a manner of determining a key by the cellular network access device is the same as a manner of determining a key by the UE.

The cellular network access device may determine, for the UE, a same key for all non-cellular network access devices in a logical functional entity, or may determine, for the UE, a same key for all non-cellular network access devices in each non-cellular network access device group in a logical functional entity, or may determine, for the UE, different keys for all non-cellular network access devices in all non-cellular network access device groups in a logical functional entity.

The key determined by the cellular network access device may be a key shared by the UE and the cellular network access device, for example, one key of KeNB, KRRCint, KRRCenc, KUPenc, KUPint, or the like, or may be a key derived based on a derivation rule according to one or more of the foregoing keys.

Specifically, the cellular network access device may determine the key for the non-cellular network access device in the following manners.

### First implementation:

The cellular network access device derives the key for the non-cellular network access device based on a key shared with the UE.

A derivation rule used to derive the key is pre-configured and is the same as a derivation rule that is pre-configured in the UE and that is used to derive a key.

### Second implementation:

The cellular network access device derives the key for the non-cellular network access device based on a key shared with the UE.

In the second implementation, the method may further include:
sending, by the cellular network access device to the UE, a derivation rule used to derive the key, where the derivation rule is used by the UE to derive a key to perform security authentication with the non-cellular network access device. Therefore, after receiving the derivation rule, the UE derives, according to the key shared with the cellular network access device, the key used to perform security authentication with the non-cellular network access device.

Specifically, the cellular network access device may send the derivation rule to the UE by using an LWA command message or another newly defined message, and the message is used to instruct the UE to perform LWA.

Step 1402: The cellular network access device sends the determined key to the non-cellular network access device.

Optionally, the cellular network access device sends the key to the non-cellular network access device by using a logical functional entity. Specifically, the logical functional entity and the non-cellular network access device communicate with each other by using a private interface. This is not limited in the present invention.

When the cellular network access device sends the key to the non-cellular network access device, the key may be sent independently. When the logical functional entity and the non-cellular network access device are a same node, the key may be included, for sending, in a GPRS Tunneling Protocol-User Plane (User plane of GPRS Tunneling Protocol, GTP-U for short) tunnel setup message sent by the cellular network access device to the logical functional entity, or may be included in another newly defined message for sending. When the logical functional entity and the non-cellular network access device are not a same node, the cellular network access device adds the key identifier to a GTP-U tunnel setup message, and sends the GTP-U tunnel setup message to the logical functional entity. Then, the logical functional entity sends the GTP-U tunnel setup message to the non-cellular network access device.

According to the solution provided in this embodiment of the present invention, a cellular network access device determines a key, and then the cellular network access device sends the determined key to a non-cellular network access device. A manner of determining a key by UE is the same as a manner of determining a key by the cellular network access device. Therefore, the UE and the non-cellular network access device may directly perform security authentication by using the key, so that an authentication time is short, and signaling overheads are low.

In an embodiment, the non-cellular network access device and the logical functional entity are a same node. That the non-cellular network access device and the logical functional entity are a same node may be that functions of the non-cellular network access device and the logical functional entity are implemented by using one device, or may be that the logical functional entity is built in the non-cellular network access device. If the logical functional entity is built in the non-cellular network access device, there is an internal interface between the logical functional entity and the non-cellular network access device, and the logical functional entity and the non-cellular network access device exchange information by using the internal interface.

The cellular network access device may determine, in the following manner, the key for association of the UE with the non-cellular network access device:
The cellular network access device determines, according to a measurement report sent by the UE, a non-cellular network access device with which the UE needs to be associated. The measurement report includes signal quality of a WLAN in which the UE is located. The cellular network access device selects a non-cellular network access device in a WLAN with relatively high signal quality for the UE.

Specifically, after receiving a measurement configuration request message sent by the cellular network access device, the UE may measure the signal quality of the WLAN in which the UE is located, and send, to the cellular network access device, the measurement report generated from a measurement result.

The cellular network access device determines a key corresponding to the non-cellular network access device selected for the UE, and the key is used to perform security authentication between the UE and the non-cellular network access device.

Then, the cellular network access device sends, to the non-cellular network access device, the determined key corresponding to the non-cellular network access device selected for the UE.

In an embodiment, if the non-cellular network access device and the logical functional entity are not a same node, the cellular network access device may determine the key for the non-cellular network access device in the following manner:
The cellular network access device determines a logical functional entity to which a non-cellular network access device to be associated with the UE belongs. The cellular network access device determines each non-cellular network access device managed by the logical functional entity. Then, the cellular network access device performs the following step for each non-cellular network access device: determining a key corresponding to each non-cellular network access device. The key is used to perform security authentication between the UE and the non-cellular network access device.

The non-cellular network access device to be associated with the UE is selected by the cellular network access device for the UE. The to-be-associated non-cellular network access device is selected to determine the logical functional entity, so that all the non-cellular network access devices managed by the logical functional entity can be determined. A specific selection manner may be as follows: After receiving a measurement configuration request message sent by the cellular network access device, the UE may measure signal quality of a WLAN in which the UE is located, and send, to the cellular network access device, a measurement report generated from a measurement result. The cellular network access device determines, according to the measurement report sent by the UE, a non-cellular network access device with which the UE needs to be associated. For example, the cellular network access device selects a non-cellular network access device in a WLAN with relatively high signal quality for the UE.

Then, the cellular network access device may send the determined key to the non-cellular network access device in the following manner:
The cellular network access device sends, to a non-cellular network access device corresponding to an identifier of each non-cellular network access device, the determined key corresponding to each non-cellular network access device.

In an embodiment, if the non-cellular network access device and the logical functional entity are not a same node, the cellular network access device may determine the key for the non-cellular network access device in the following manner:
The cellular network access device determines a logical functional entity managing the non-cellular network access device. The logical functional entity manages at least one non-cellular network access device that includes the non-cellular network access device.

The cellular network access device determines a key for the at least one non-cellular network access device. Keys corresponding to identifiers of all non-cellular network access devices in the at least one non-cellular network access device are the same, and the key is used to perform security authentication between the UE and a non-cellular network access device corresponding to an identifier of the non-cellular network access device.

Then, the cellular network access device sends the determined key to the non-cellular network access device.

In an embodiment, if the non-cellular network access device and the logical functional entity are not a same node, the cellular network access device may determine the key for the non-cellular network access device in the following manner:
The cellular network access device determines a logical functional entity managing the non-cellular network access device. The logical functional entity manages at least one non-cellular network access device that includes the non-cellular network access device, and the at least one non-cellular network access device is included in at least one non-cellular network access device group. That is, all non-cellular network access devices managed by the logical functional entity are classified into non-cellular network access device groups, and each group includes at least one non-cellular network access device.

The cellular network access device determines a key for each non-cellular network access device group. Keys corresponding to identifiers of all non-cellular network access devices included in each non-cellular network access device group are the same, and the key is used to perform security authentication between the UE and a non-cellular network access device corresponding to an identifier of the non-cellular network access device. Different non-cellular network access device groups are corresponding to different keys.

Optionally, after determining the key for the non-cellular network access device, the cellular network access device determines a key identifier corresponding to the key, and then sends the determined key identifier to the non-cellular network access device.

The key identifier and the key may be sent simultaneously, or may be sent separately. A manner of determining, by the cellular network access device, the key identifier corresponding to the key is the same as a manner of determining, by the UE, a key identifier corresponding to the key.

Specifically, the key identifier may be determined based on the key, an identity of the UE, and an identifier of the non-cellular network access device, or may be determined based on the key and an identity of the UE, or may be determined by using an identity of the UE and an identifier of the non-cellular network access device, or may be determined by using an identifier of the non-cellular network access device and the key, or may be determined only by using an identity of the UE.

The key identifier in this embodiment of the present invention is used for LWA. Therefore, the key identifier can be differentiated from a key identifier used for a conventional WLAN service. Specifically, if a conventional WLAN service is authenticated in an AAA server, a key identifier may also be generated, and this key identifier is different from the key identifier used for LWA. The key identifier may be marked for differentiation.

An embodiment of the present invention further provides an access authentication method. As shown in FIG. 15, the method includes the following steps.

Step 1501: UE determines a key, and the key is used to perform security authentication between the UE and a non-cellular network access device.

Optionally, the UE may determine the key in the following manner:
The UE derives, based on a key shared with a cellular network access device, the key by using a derivation rule.

The derivation rule may be sent by the cellular network access device. Specifically, the cellular network access device may send the derivation rule to the UE by using an LWA command message.

The derivation rule may be pre-configured in the UE and is the same as a derivation rule used by the cellular network access device to derive a key for the non-cellular network access device. That is, the derivation rule may be pre-configured in the UE and the cellular network access device.

Step 1502: The UE determines a key identifier corresponding to the key.

The key identifier may be determined by the cellular network access device based on the key, an identity of the UE, and an identifier of the non-cellular network access device, or may be determined based on the key and an identity of the UE, or may be determined by using an identity of the UE and an identifier of the non-cellular network access device, or may be determined by using an identifier of the non-cellular network access device and the key, or may be determined only by using an identity of the UE.

For example, PMKID=HMAC-SHA1-128(PMK, "PMK_name"|MAC_AP|MAC_UE).

PMKID represents the key identifier, PMK represents the key, PMK_name represents a name of the key, and MAC_UE represents the identity of the UE, that is, a WLAN MAC address of the UE. MAC_AP represents the identifier of the non-cellular network access device, that is, a MAC address of the non-cellular network access device. HMAC is a hash-based message authentication code related to the key. SHA1 is a secure hash algorithm.

Step 1503: The UE performs security authentication with the non-cellular network access device by using the key and the key identifier.

Specifically, the UE initiates an association request to the non-cellular network access device, and the association request carries the identity of the UE and the key identifier. After receiving the association request, the non-cellular network access device may determine, according to the identity of the UE, a key identifier that is corresponding to the key that is received in advance and sent by the cellular network access device, or may determine, according to the identity of the UE and the key, a key identifier corresponding to the key. If the cellular network access device determines that the key identifier carried in the association request is the same as the determined key identifier, a 4-way handshake security authentication with the UE is performed by using the key corresponding to the key identifier.

The key identifier in this embodiment of the present invention is used for LWA. Therefore, the key identifier can be differentiated from a key identifier used for a conventional WLAN service. Specifically, if a conventional WLAN service is authenticated in an AAA server, a key identifier may also be generated, and this key identifier is different from the key identifier used for LWA. The key identifier may be marked for differentiation.

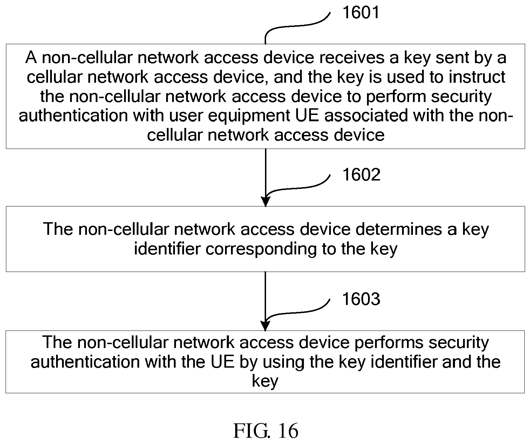

An embodiment of the present invention further provides an access authentication method. As shown in FIG. 16, the method includes the following steps.

Step 1601: A non-cellular network access device receives a key sent by a cellular network access device, and the key is used to instruct the non-cellular network access device to perform security authentication with user equipment UE associated with the non-cellular network access device.

Step 1602: The non-cellular network access device determines a key identifier corresponding to the key.

Optionally, the cellular network access device may determine, according to the key and an identifier of the cellular network access device, the key identifier corresponding to the key, or may determine, according to an identity of the UE and the key after receiving an association request that is sent by the UE and that carries the identity of the UE, the key identifier corresponding to the key, or may determine, according to an identity of the UE, an identifier of the cellular network access device, and the key, the key identifier corresponding to the key.

Optionally, the non-cellular network access device may determine, in the following manner, the key identifier corresponding to the key: The non-cellular network access device receives the key identifier that is corresponding to the key and that is sent by the cellular network access device.

Step 1603: The non-cellular network access device performs security authentication with the UE by using the key identifier and the key.

Specifically, the UE sends the association request to the non-cellular network access device. Then, if the non-cellular network access device determines that a received key identifier sent by the UE is the same as the key identifier stored by the non-cellular network access device, the UE and the non-cellular network access device execute a 4-way handshake procedure based on the key corresponding to the key identifier. After the 4-way handshake authentication succeeds, the cellular network access device may perform multi-stream aggregation data transmission with the UE by using the non-cellular network access device.

The key identifier in this embodiment of the present invention is used for LWA. Therefore, the key identifier can be differentiated from a key identifier used for a conventional WLAN service. Specifically, if a conventional WLAN service is authenticated in an AAA server, a key identifier may also be generated, and this key identifier is different from the key identifier used for LWA. The key identifier may be marked for differentiation.

The following specifically describes the embodiments of the present invention with reference to an instance. In the following instance, an example in which a cellular network is an LTE network, a cellular network access device is an eNB, a non-cellular network is a WLAN, a non-cellular network access device is an AP, and a logical functional entity is a WT is used for description.

The embodiments of the present invention are specifically described by using the offloading and aggregation network system shown in FIG. 4A and FIG. 4B as an example.

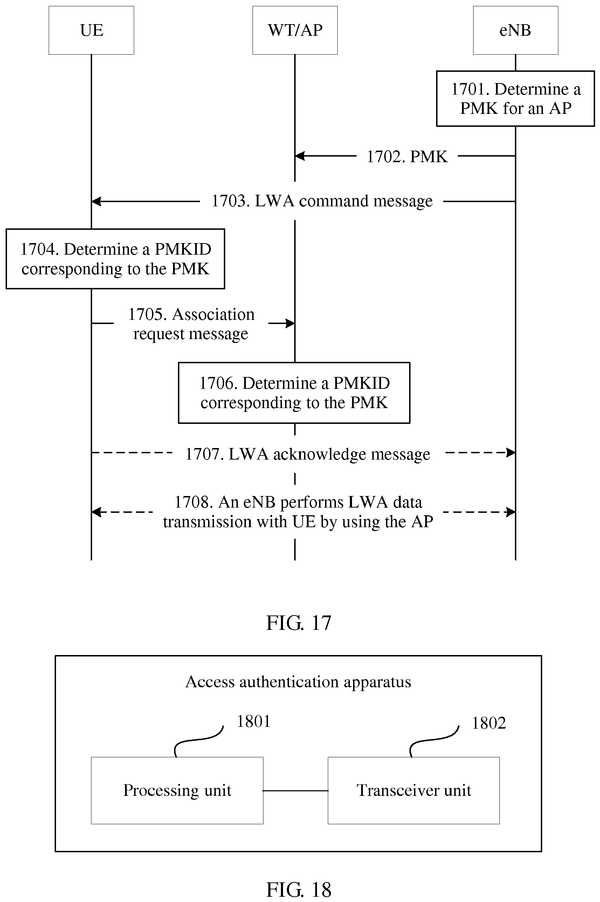

Referring to FIG. 17, FIG. 17 is a schematic diagram of an access authentication method according to an embodiment of the present invention.

Step 1701: An eNB determines a PMK for an AP.

The PMK represents a key, and the PMK is used to perform security authentication between UE and the AP.

The eNB may determine a same key for all APs in a WT, or may determine a same key for all APs in each AP group in a WT, or may determine different keys for all APs in all AP groups in a WT.

Specifically, the PMK may be a key shared by the eNB and the UE, for example, one key of KeNB, KRRCint, KRRCenc, KUPenc, KUPint, or the like, or may be a key derived based on a derivation rule according to one or more of the foregoing keys.

Step 1702: The eNB sends the determined PMK to a WT.

The WT may send, to each AP by using a private interface between the WT and the AP, a PMK corresponding to each AP.

The PMK may be sent independently, or may be added to a GTP-U tunnel setup message (such as a WT addition request message) and sent to the WT, or may be added to a user-defined message for sending, or the like.

Optionally, before step 1701, the method may further include the following step.

The WT sends a key request message to the eNB, and the key request message is used to instruct the eNB to determine the key for each AP managed by the WT.

Optionally, the eNB may further determine a PMKID corresponding to the PMK, and then send the PMKID to the WT. Herein, a manner of determining, by the eNB, the PMKID corresponding to the PMK is the same as a manner of determining, by the UE, a PMKID corresponding to the PMK in step 1704. The WT may send the PMKID to the AP by using the private interface between the WT and the AP.

Step 1703: UE receives an LWA command message sent by the eNB.

The LWA command message is used by the UE to perform LWA-related configuration. The LWA command message may carry information about an AP group. The LWA command message may carry a derivation rule used by the eNB to instruct the UE to derive a key.

After receiving the LWA command message, the UE may determine, based on the derivation rule, a key for each AP included in the AP group. Therefore, the key is the same as the key sent by the eNB to each AP.

After receiving the LWA command message, the UE may select, from all the APs included in the AP group, an AP as a target AP. The AP may be an AP providing a strongest signal. Then, the UE determines a key based on the derivation rule, to perform security authentication with the AP.

Step 1704: The UE determines a PMKID corresponding to the PMK.

The PMKID may be determined by the UE based on an identity of the UE. The identity of the UE may be a WLAN MAC address of the UE. The PMKID may be determined by the UE based on an identifier of the AP, or may be determined by using the PMK, the identity of the UE, and an identifier of the AP, or may be determined by using the key PMK and the identity of the UE, or may be determined by using the PMK and an identifier of the AP. The identifier of the AP may be a BSSID/ESSID/SSID.

For example, PMKID=HMAC-SHA1-128(PMK, "PMK_name"|MAC_AP|MAC_UE).

PMK_name represents a name of the key, and MAC_UE represents the identity of the UE, that is, the WLAN MAC address of the UE. MAC_AP represents the identifier of the AP, that is, a MAC address of the AP. HMAC is a hash-based message authentication code related to the key. SHA1 is a secure hash algorithm.

Step 1705: The UE sends an association request message to a WLAN AP.

The association request message carries the PMKID.

Step 1706: The AP determines a PMKID corresponding to the PMK.

Specifically, the PMKID may be determined by the AP based on the identity of the UE. The identity of the UE may be the WLAN MAC address of the UE. The PMKID may be determined by the AP based on the identifier of the AP, or may be determined by using the PMK, the identity of the UE, and the identifier of the AP, or may be determined by using the key PMK and the identity of the UE, or may be determined by using the PMK and the identifier of the AP. A manner of determining, by the AP, the PMKID corresponding to the PMK is the same as a manner of determining, by the UE, the PMKID corresponding to the PMK.

The PMKID that is determined by the AP and that is corresponding to the PMK is the same as the received PMKID sent by the UE, and therefore, the PMK corresponding to the PMKID is used to perform 4-way handshake security authentication. If the PMKID that is determined by the AP and that is corresponding to the PMK is different from the received PMKID sent by the UE, authentication fails.

Optionally, the AP may determine, in the following manner, the PMKID corresponding to the PMK: The AP receives a PMKID that is corresponding to the PMK and that is sent by the eNB by using the WT managing the AP.

Optionally, the method may further include the following step.

Step 1707: The UE sends an LWA acknowledge message to the eNB, and the message is used to indicate that LWA succeeds or fails.

Alternatively, the LWA acknowledge message (or a WT addition acknowledge message) is sent to the eNB by using the WT, and the message is used to indicate that LWA succeeds. The WT may be notified, by using the AP, of whether the WT is successfully added, and a specific implementation is not limited in the present invention.

When the eNB receives an LWA success message sent by the UE or the WT, the method further includes the following step.

Step 1708: The eNB performs LWA data transmission with the UE by using the AP.

Based on an invention concept the same as that of the method embodiment depicted in FIG. 14, as shown in FIG. 18, an embodiment of the present invention provides an access authentication apparatus. The apparatus is applied to a cellular network access device, and may be specifically an apparatus that is independent of the cellular network access device, or may be an apparatus disposed in the cellular network access device, or may be implemented by the cellular network access device. The access authentication apparatus includes:
a processing unit 1801, configured to determine a key for a non-cellular network access device, where the key is used to perform security authentication between user equipment UE and the non-cellular network access device, and a manner of determining a key by the processing unit is the same as a manner of determining a key by the UE; and
a transceiver unit 1802, configured to send the key determined by the processing unit 1801 to the non-cellular network access device.

Optionally, when determining the key for the non-cellular network access device, the processing unit 1801 is specifically configured to derive the key for the non-cellular network access device based on a key shared with the UE. A derivation rule used to derive the key is pre-configured and is the same as a derivation rule that is pre-configured in the UE and that is used to derive a key.

Optionally, when determining the key for the non-cellular network access device, the processing unit 1801 is specifically configured to derive the key for the non-cellular network access device based on a key shared with the UE.

The transceiver unit 1802 is further configured to send, to the UE, a derivation rule used to derive the key, and the derivation rule is used by the UE to derive a key to perform security authentication with the non-cellular network access device.

Optionally, when determining the key for the non-cellular network access device, the processing unit 1801 is specifically configured to:
determine a logical functional entity managing the non-cellular network access device, where the logical functional entity manages at least one non-cellular network access device that includes the non-cellular network access device; and
perform the following step for each non-cellular network access device managed by the logical functional entity: determining a key corresponding to an identifier of each non-cellular network access device.

When sending the key determined by the processing unit 1801 to the non-cellular network access device, the transceiver unit 1802 is specifically configured to send, to a non-cellular network access device corresponding to the identifier of each non-cellular network access device, the key that is determined by the processing unit 1801 and that is corresponding to each non-cellular network access device.

Optionally, when determining the key for the non-cellular network access device, the processing unit 1801 is specifically configured to: determine a logical functional entity managing the non-cellular network access device, where the logical functional entity manages at least one non-cellular network access device that includes the non-cellular network access device; and
determine a key for the at least one non-cellular network access device, where keys corresponding to identifiers of all non-cellular network access devices in the at least one non-cellular network access device are the same, and the key is used to perform security authentication between the UE and a non-cellular network access device corresponding to an identifier of the non-cellular network access device.

Optionally, when determining the key for the non-cellular network access device, the processing unit 1801 is specifically configured to:
determine a logical functional entity managing the non-cellular network access device, where the logical functional entity manages at least one non-cellular network access device that includes the non-cellular network access device, and the at least one non-cellular network access device is included in at least one non-cellular network access device group; and
determine a key for each non-cellular network access device group, where keys corresponding to identifiers of all non-cellular network access devices included in each non-cellular network access device group are the same, and the key is used to perform security authentication between the UE and a non-cellular network access device corresponding to an identifier of the non-cellular network access device.

The processing unit 1801 is further configured to: after determining the key for the non-cellular network access device, determine a key identifier corresponding to the key.

The transceiver unit 1802 is further configured to send the key identifier determined by the processing unit to the non-cellular network access device.

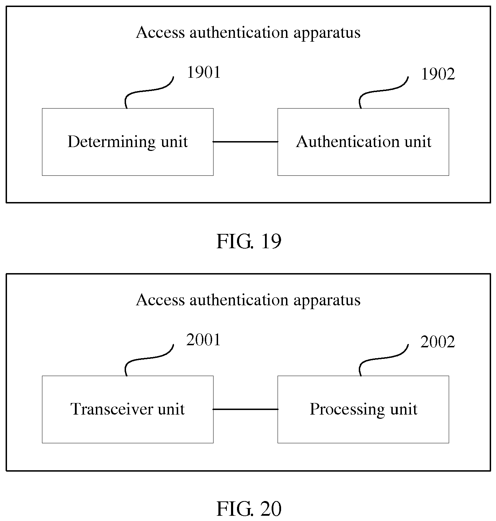

Based on an invention concept the same as that of the method embodiment depicted in FIG. 15, as shown in FIG. 19, an embodiment of the present invention further provides an access authentication apparatus. The apparatus is applied to UE, and may be specifically an apparatus that is independent of the UE, or may be an access authentication apparatus disposed in the UE, or may be implemented by the UE. The access authentication apparatus includes:
a determining unit 1901, configured to: determine a key, where the key is used to perform security authentication between the UE and a non-cellular network access device; and determine a key identifier corresponding to the key; and
an authentication unit 1902, configured to perform security authentication with the non-cellular network access device by using the key and the key identifier.

When determining the key, the determining unit 1901 is specifically configured to derive, based on a key shared with a cellular network access device, the key by using a derivation rule. The derivation rule is sent by the cellular network access device, or the derivation rule is pre-configured in the UE and is the same as a derivation rule used by the cellular network access device to derive a key for the non-cellular network access device.

Based on an invention concept the same as that of the method embodiment depicted in FIG. 16, as shown in FIG. 20, an embodiment of the present invention further provides an access authentication apparatus. The apparatus is applied to a non-cellular network access device, and may be specifically an access authentication apparatus that is independent of the non-cellular network access device, or may be disposed in the non-cellular network access device, or may be implemented by the non-cellular network access device. The access authentication apparatus includes:
a transceiver unit 2001, configured to receive a key sent by a cellular network access device, where the key is used to instruct the non-cellular network access device to perform security authentication with user equipment UE associated with the non-cellular network access device; and
a processing unit 2002, configured to: determine a key identifier corresponding to the key, and perform security authentication with the UE by using the key identifier and the key.

The transceiver unit 2001 is further configured to receive the key identifier that is corresponding to the key and that is sent by the cellular network access device.

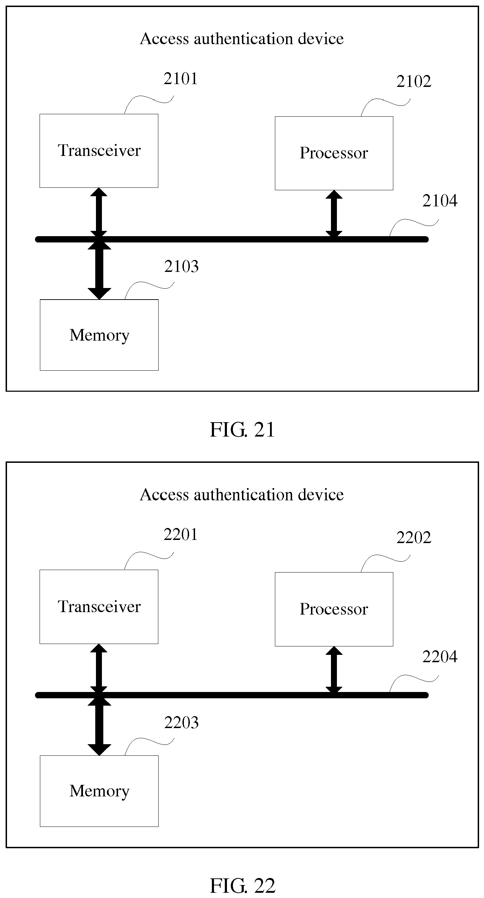

Based on an invention concept the same as that of the apparatus embodiment depicted in FIG. 18, an embodiment of the present invention further provides an access authentication device. The device may be a device that is independent of a cellular network access device, or may be a device disposed in a cellular network access device, or may be implemented by a cellular network access device. As shown in FIG. 21, the device includes a transceiver 2101, a processor 2102, and a memory 2103. The transceiver 2101, the processor 2102, and the memory 2103 are connected to each other. A specific connection medium between the foregoing components is not limited in this embodiment of the present invention. In this embodiment of the present invention, in FIG. 21, the memory 2103, the processor 2102, and the transceiver 2101 are connected to each other by using a bus 2104. The bus is represented by using a thick line in FIG. 21. A manner of connection between other components is only an example, and is not limited. The bus may be classified into an address bus, a data bus, a control bus, or the like. For ease of representation, only one thick line is used in FIG. 21 for representation, but it does not indicate that there is only one bus or one type of bus.

The memory 2103 in this embodiment of the present invention is configured to store program code executed by the processor 2102, and may be a volatile memory (volatile memory) such as a random-access memory (random-access memory, RAM for short). Alternatively, the memory 2103 may be a non-volatile memory (non-volatile memory) such as a read-only memory (read-only memory, ROM for short), a flash memory (flash memory), a hard disk drive (hard disk drive, HDD for short), or a solid-state drive (solid-state drive, SSD for short). Alternatively, the memory 2103 is any other medium that can be used to carry or store expected program code in a command or data structure form and that can be accessed by a computer. However, this is not limited. The memory 2103 may be a combination of the foregoing memories.

The processor 2102 in this embodiment of the present invention may be a central processing unit (central processing unit, CPU for short).

The processor 2102 is configured to determine a key for a non-cellular network access device, the key is used to perform security authentication between user equipment UE and the non-cellular network access device, and a manner of determining a key by the processor 2102 is the same as a manner of determining a key by the UE.

The transceiver 2101 is configured to send the key determined by the processor 2102 to the non-cellular network access device.

It should be noted that the processor 2102 may further execute another operation executed by the processing unit 1801 shown in FIG. 18, and the transceiver 2101 may further execute another operation executed by the transceiver unit 1802 shown in FIG. 18.

Based on an invention concept the same as that of the apparatus embodiment depicted in FIG. 19, an embodiment of the present invention further provides an access authentication device. The device may be a device that is independent of UE, or may be a device disposed in UE, or may be implemented by UE. As shown in FIG. 22, the device includes a transceiver 2201, a processor 2202, and a memory 2203. The transceiver 2201, the processor 2202, and the memory 2203 are connected to each other. A specific connection medium between the foregoing components is not limited in this embodiment of the present invention. In this embodiment of the present invention, in FIG. 22, the memory 2203, the processor 2202, and the transceiver 2201 are connected to each other by using a bus 2204. The bus is represented by using a thick line in FIG. 22. A manner of connection between other components is only an example, and is not limited. The bus may be classified into an address bus, a data bus, a control bus, or the like. For ease of representation, only one thick line is used in FIG. 22 for representation, but it does not indicate that there is only one bus or one type of bus.

The memory 2203 in this embodiment of the present invention is configured to store program code executed by the processor 2202, and may be a volatile memory such as a random-access memory. Alternatively, the memory 2203 may be a non-volatile memory (non-volatile memory) such as a ROM, a flash memory, an HDD, or an SSD. Alternatively, the memory 2203 is any other medium that can be used to carry or store expected program code in a command or data structure form and that can be accessed by a computer. However, this is not limited. The memory 2203 may be a combination of the foregoing memories.

The processor 2202 in this embodiment of the present invention may be a CPU.

The processor 2202 is configured to: determine a key, where the key is used to perform security authentication between the UE and a non-cellular network access device; determine a key identifier corresponding to the key; and perform security authentication with the non-cellular network access device by using the key and the key identifier.

It should be noted that the processor 2202 may further execute other operations executed by the determining unit 1901 and the authentication unit 1902 shown in FIG. 19.

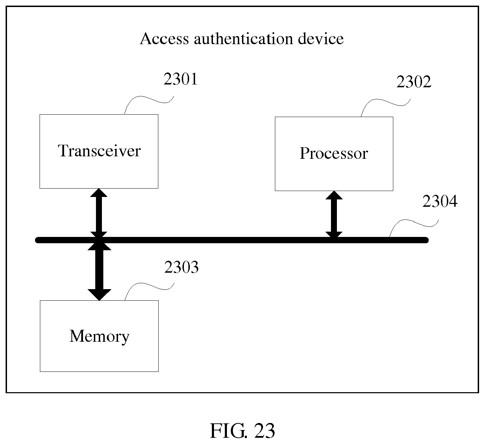

Based on an invention concept the same as that of the apparatus embodiment depicted in FIG. 20, an embodiment of the present invention further provides an access authentication device. The device may be a device that is independent of a non-cellular network access device, or may be a device disposed in a non-cellular network access device, or may be implemented by a non-cellular network access device. As shown in FIG. 23, the device includes a transceiver 2301, a processor 2302, and a memory 2303. The transceiver 2301, the processor 2302, and the memory 2303 are connected to each other. A specific connection medium between the foregoing components is not limited in this embodiment of the present invention. In this embodiment of the present invention, in FIG. 23, the memory 2303, the processor 2302, and the transceiver 2301 are connected to each other by using a bus 2304. The bus is represented by using a thick line in FIG. 23. A manner of connection between other components is only an example, and is not limited. The bus may be classified into an address bus, a data bus, a control bus, or the like. For ease of representation, only one thick line is used in FIG. 23 for representation, but it does not indicate that there is only one bus or one type of bus.

The memory 2303 in this embodiment of the present invention is configured to store program code executed by the processor 2302, and may be a volatile memory such as a random-access memory. Alternatively, the memory 2303 may be a non-volatile memory (non-volatile memory) such as a ROM, a flash memory, an HDD, or an SSD. Alternatively, the memory 2303 is any other medium that can be used to carry or store expected program code in a command or data structure form and that can be accessed by a computer. However, this is not limited. The memory 2303 may be a combination of the foregoing memories.

The processor 2302 in this embodiment of the present invention may be a CPU.

The transceiver 2301 is configured to receive a key sent by a cellular network access device, where the key is used to instruct the non-cellular network access device to perform security authentication with user equipment UE associated with the non-cellular network access device.

The processor 2302 is configured to: determine a key identifier corresponding to the key, and perform security authentication with the UE by using the key identifier and the key.

It should be noted that the processor 2302 may further execute another operation executed by the processing unit 2002 shown in FIG. 20, and the transceiver 2301 may further execute another operation executed by the transceiver unit 2001 shown in FIG. 20.

An embodiment of the present invention further provides an access authentication system. The system includes a cellular network access device, a non-cellular network access device, and UE. The cellular network access device may be the cellular network access device provided in the embodiment corresponding to FIG. 18 or FIG. 21. The UE may be the UE provided in the embodiment corresponding to FIG. 19 or FIG. 22. The non-cellular network access device may be the non-cellular network access device provided in the embodiment corresponding to FIG. 20 or FIG. 23.

It should be noted that a quantity of devices included in the access authentication system is not specifically limited in this embodiment of the present invention.

Persons skilled in the art should understand that the embodiments of the present invention may be provided as a method, a system, or a computer program product. Therefore, the present invention may use a form of hardware only embodiments, software only embodiments, or embodiments with a combination of software and hardware. In addition, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some embodiments of the present invention have been described, persons skilled in the art can make changes and modifications to these embodiments once they learn the basic inventive concept. Therefore, the following claims are intended to be construed as to cover the embodiments and all changes and modifications falling within the scope of the present invention.

Obviously, persons skilled in the art can make various modifications and variations to the embodiments of the present invention without departing from the scope of the embodiments of the present invention. The present invention is intended to cover these modifications and variations provided that they fall within the scope of protection defined by the following claims

## Claims

1. An access authentication method, comprising:
determining (1401), by a cellular network access device, a key for a non-cellular network access device, wherein the key is used to perform security authentication between user equipment, UE, and the non-cellular network access device, and a manner of determining a key by the cellular network access device is the same as a manner of determining a key by the UE; and
sending (1402), by the cellular network access device, the determined key to the non-cellular network access device;
wherein the key is derived from a key of the cellular network access device, and a derivation rule used to derive the key is the same as a derivation rule that is used to derive a key by the UE.

2. The method according to claim 1, wherein the determining (1401), by a cellular network access device, a key for a non-cellular network access device comprises:
deriving, by the cellular network access device, the key for the non-cellular network access device based on a key shared with the UE, wherein a derivation rule used to derive the key is pre-configured and is the same as a derivation rule that is pre-configured in the UE and that is used to derive a key.

3. The method according to claim 1, wherein the determining (1401), by a cellular network access device, a key for a non-cellular network access device comprises:
deriving, by the cellular network access device, the key for the non-cellular network access device based on a key shared with the UE; and
the method further comprises:
sending, by the cellular network access device to the UE, a derivation rule used to derive the key, wherein the derivation rule is used by the UE to derive a key to perform security authentication with the non-cellular network access device.

4. The method according to any one of claims 1 to 3, wherein the determining (1401), by a cellular network access device, a key for a non-cellular network access device comprises:
determining, by the cellular network access device, a logical functional entity managing the non-cellular network access device, wherein the logical functional entity manages at least one non-cellular network access device that comprises the non-cellular network access device, and the at least one non-cellular network access device is comprised in at least one non-cellular network access device group; and
determining, by the cellular network access device, a key for each non-cellular network access device group, wherein keys corresponding to identifiers of all non-cellular network access devices comprised in each non-cellular network access device group are the same, and the key is used to perform security authentication between the UE and a non-cellular network access device corresponding to an identifier of the non-cellular network access device.

5. An access authentication method, comprising:
determining (1501), by user equipment, UE, a key, wherein the key is used to perform security authentication between the UE and a non-cellular network access device;
determining (1502), by the UE, a key identifier corresponding to the key; and
performing (1503), by the UE, security authentication with the non-cellular network access device by using the key and the key identifier;
wherein the key is derived from a key of the UE, and a derivation rule used to derive the key is the same as a derivation rule that is used to derive a key by a cellular network access device.

6. The method according to claim 5, wherein the determining (1501), by UE, a key comprises:
deriving, by the UE based on a key shared with a cellular network access device, the key by using a derivation rule, wherein
the derivation rule is sent by the cellular network access device, or the derivation rule is pre-configured in the UE and is the same as a derivation rule used by the cellular network access device to derive a key for the non-cellular network access device.

7. The method according to claim 5 or 6, wherein
the key determined by the UE is same as a key that is determined by a cellular network access device and sent to the non-cellular network access device.

8. An access authentication method, comprising:
receiving (1601), by a non-cellular network access device, a key sent by a cellular network access device, wherein the key is used to instruct the non-cellular network access device to perform security authentication with user equipment, UE, associated with the non-cellular network access device;
determining (1602), by the non-cellular network access device, a key identifier corresponding to the key; and
performing (1603), by the non-cellular network access device, security authentication with the UE by using the key identifier and the key;
wherein the key is derived from a key of the cellular network access device, and a derivation rule used to derive the key is the same as a derivation rule that is used to derive a key by the UE.

9. The method according to claim 8, wherein the determining (1602), by the non-cellular network access device, a key identifier corresponding to the key comprises:
receiving, by the non-cellular network access device, the key identifier that is corresponding to the key and that is sent by the cellular network access device.

10. The method according to claim 8 or 9, wherein
the key received from the cellular network access device is same as a key determined by the UE for the security authentication.

11. An apparatus, wherein the apparatus is applied to a cellular network access device and comprises:
a processing unit (1801), configured to determine a key for a non-cellular network access device, wherein the key is used to perform security authentication between user equipment, UE, and the non-cellular network access device, and a manner of determining a key by the processing unit is the same as a manner of determining a key by the UE; and
a transceiver unit (1802), configured to send the key determined by the processing unit to the non-cellular network access device;
wherein the key is derived from a key of the cellular network access device, and a derivation rule used to derive the key is the same as a derivation rule that is used to derive a key by the UE.

12. The apparatus according to claim 11, wherein the processing unit (1801) is specifically configured to derive the key for the non-cellular network access device based on a key shared with the UE, and a derivation rule used to derive the key is pre-configured and is the same as a derivation rule that is pre-configured in the UE and that is used to derive a key.

13. The apparatus according to claim 11, wherein the processing unit (1802) is specifically configured to derive the key for the non-cellular network access device based on a key shared with the UE; and
the transceiver unit (1802) is further configured to send, to the UE, a derivation rule used to derive the key, and the derivation rule is used by the UE to derive a key to perform security authentication with the non-cellular network access device.

14. The apparatus according to any one of claims 11 to 13, wherein the processing unit (1801) is specifically configured to:
determine a logical functional entity managing the non-cellular network access device, wherein the logical functional entity manages at least one non-cellular network access device that comprises the non-cellular network access device, and the at least one non-cellular network access device is comprised in at least one non-cellular network access device group; and
determine a key for each non-cellular network access device group, wherein keys corresponding to identifiers of all non-cellular network access devices comprised in each non-cellular network access device group are the same, and the key is used to perform security authentication between the UE and a non-cellular network access device corresponding to an identifier of the non-cellular network access device.

15. An apparatus, wherein the apparatus is applied to user equipment, UE, and comprises:
a determining unit (1901), configured to determine a key, wherein the key is used to perform security authentication between the UE and a non-cellular network access device; and determine a key identifier corresponding to the key; and
an authentication unit (1902), configured to perform security authentication with the non-cellular network access device by using the key and the key identifier;
wherein the key is derived from a key of the UE, and a derivation rule used to derive the key is the same as a derivation rule that is used to derive a key by a cellular network access device.

16. The apparatus according to claim 15, wherein the determining unit (1901) is specifically configured to derive, based on a key shared with a cellular network access device, the key by using a derivation rule, wherein
the derivation rule is sent by the cellular network access device, or the derivation rule is pre-configured in the UE and is the same as a derivation rule used by the cellular network access device to derive a key for the non-cellular network access device.

17. The apparatus according to claim 15 or 16, wherein
the key determined by the determining unit (1901) is same as a key that is determined by a cellular network access device and sent to the non-cellular network access device.

18. An apparatus, wherein the apparatus is applied to a non-cellular network access device and comprises:
a transceiver unit (2001), configured to receive a key sent by a cellular network access device, wherein the key is used to instruct the non-cellular network access device to perform security authentication with user equipment, UE, associated with the non-cellular network access device; and
a processing unit (2002), configured to determine a key identifier corresponding to the key, and perform security authentication with the UE by using the key identifier and the key;
wherein the key is derived from a key of the cellular network access device, and a derivation rule used to derive the key is the same as a derivation rule that is used to derive a key by the UE.

19. The apparatus according to claim 18, wherein the transceiver unit (2001) is further configured to receive the key identifier that is corresponding to the key and that is sent by the cellular network access device.

20. The apparatus according to claim 18 or 19, wherein
the key received from the cellular network access device is same as a key determined by the UE for the security authentication.

21. A communications system, comprising a cellular network access device, a non-cellular network access device, and user equipment, UE, wherein
the cellular network access device comprises the apparatus according to any one of the claims 11 to 14;
the non-cellular network access device comprises the apparatus according to claim 17 to 19.

22. A computer-readable storage medium comprising instructions which, when executed by a computer, cause the computer to carry out any one of the methods of claims 1 to 10.

## Patentansprüche

1. Zugangsauthentifizierungsverfahren, Folgendes umfassend:
Bestimmen (1401) eines Schlüssels für ein Zugangsgerät eines Nicht-Mobilfunknetzes durch ein Zugangsgerät eines Mobilfunknetzes, wobei der Schlüssel verwendet wird, um eine Sicherheitsauthentifizierung zwischen Benutzerausrüstung (UE) und dem Zugangsgerät eines Nicht-Mobilfunknetzes durchzuführen, und eine Art und Weise des Bestimmens eines Schlüssels durch das Zugangsgerät eines Mobilfunknetzes die gleiche ist wie eine Art und Weise des Bestimmens eines Schlüssels durch die UE, und
Senden (1402) des bestimmten Schlüssels an das Zugangsgerät eines Nicht-Mobilfunknetzes durch das Zugangsgerät eines Mobilfunknetzes,
wobei der Schlüssel von einem Schlüssel des Zugangsgerät eines Mobilfunknetzes abgeleitet wird und eine Ableitungsregel, die verwendet wird, um den Schlüssel abzuleiten, die gleiche ist wie eine Ableitungsregel, die verwendet wird, um einen Schlüssel durch die UE abzuleiten.

2. Verfahren nach Anspruch 1, wobei das Bestimmen (1401) eines Schlüssels für ein Zugangsgerät eines Nicht-Mobilfunknetzes durch ein Zugangsgerät eines Mobilfunknetzes Folgendes umfasst:
Ableiten des Schlüssels für das Zugangsgerät eines Nicht-Mobilfunknetzes durch das Zugangsgerät eines Mobilfunknetzes basierend auf einem Schlüssel, der mit der UE gemeinsam genutzt wird, wobei eine Ableitungsregel, die verwendet wird, um den Schlüssel abzuleiten, vorkonfiguriert ist und die gleiche ist, wie eine Ableitungsregel, die in der UE vorkonfiguriert ist und die verwendet wird, um einen Schlüssel abzuleiten.

3. Verfahren nach Anspruch 1, wobei das Bestimmen (1401) eines Schlüssels für ein Zugangsgerät eines Nicht-Mobilfunknetzes durch ein Zugangsgerät eines Mobilfunknetzes Folgendes umfasst:
Ableiten des Schlüssels für das Zugangsgerät eines Nicht-Mobilfunknetzes durch das Zugangsgerät eines Mobilfunknetzes basierend auf einem Schlüssel, der mit der UE gemeinsam genutzt wird, und
wobei das Verfahren ferner Folgendes umfasst:
Senden einer Ableitungsregel, die verwendet wird, um den Schlüssel abzuleiten, durch das Zugangsgerät eines Mobilfunknetzes an die UE, wobei die Ableitungsregel von der UE verwendet wird, um einem Schlüssel abzuleiten, um eine Sicherheitsauthentifizierung mit dem Zugangsgerät eines Nicht-Mobilfunknetzes durchzuführen.

4. Verfahren nach einem der Ansprüche 1 bis 3, wobei das Bestimmen (1401) eines Schlüssels für ein Zugangsgerät eines Nicht-Mobilfunknetzes durch ein Zugangsgerät eines Mobilfunknetzes Folgendes umfasst:
Bestimmen einer logischen funktionalen Entität, die das Zugangsgerät eines Nicht-Mobilfunknetzes verwaltet, durch das Zugangsgerät eines Mobilfunknetzes, wobei die logische funktionale Entität mindestens ein Zugangsgerät eines Nicht-Mobilfunknetzes verwaltet, das das Zugangsgerät eines Nicht-Mobilfunknetzes umfasst, und das mindestens eine Zugangsgerät eines Nicht-Mobilfunknetzes in mindestens einer Gruppe von Zugangsgeräten eines Nicht-Mobilfunknetzes enthalten ist, und
Bestimmen eines Schlüssels für jede Gruppe von Zugangsgeräten eines Nicht-Mobilfunknetzes durch das Zugangsgerät eines Mobilfunknetzes, wobei Schlüssel, die Kennungen von allen Zugangsgeräten eines Nicht-Mobilfunknetzes entsprechen, die in jeder Gruppe von Zugangsgeräten eines Nicht-Mobilfunknetzes enthalten sind, gleich sind und der Schlüssel verwendet wird, um eine Sicherheitsauthentifizierung zwischen der UE und einem Zugangsgerät eines Nicht-Mobilfunknetzes durchzuführen, das einer Kennung des Zugangsgeräts eines Nicht-Mobilfunknetzes entspricht.

5. Zugangsauthentifizierungsverfahren, Folgendes umfassend:
Bestimmen (1501) eines Schlüssels durch eine Benutzerausrüstung (UE), wobei der Schlüssel verwendet wird, um eine Sicherheitsauthentifizierung zwischen der UE und einem Zugangsgerät eines Nicht-Mobilfunknetzes durchzuführen,
Bestimmen (1502) einer Schlüsselkennung, die dem Schlüssel entspricht, durch die UE und
Durchführen (1503) der Sicherheitsauthentifizierung mit dem Zugangsgerät eines Nicht-Mobilfunknetzes unter Verwendung des Schlüssels und der Schlüsselkennung durch die UE,
wobei der Schlüssel von einem Schlüssel der UE abgeleitet wird und eine Ableitungsregel, die verwendet wird, um den Schlüssel abzuleiten, die gleiche ist wie eine Ableitungsregel, die verwendet wird, um einen Schlüssel durch ein Zugangsgerät eines Mobilfunknetzes abzuleiten.

6. Verfahren nach Anspruch 5, wobei das Bestimmen (1501) eines Schlüssels durch die UE Folgendes umfasst:
Ableiten des Schlüssels unter Anwendung der Ableitungsregel durch die UE basierend auf einem Schlüssel, der mit einem Zugangsgerät eines Mobilfunknetzes gemeinsam genutzt wird, wobei
die Ableitungsregel durch das Zugangsgerät eines Mobilfunknetzes versandt wird oder die Ableitungsregel in der UE vorkonfiguriert ist und die gleiche ist wie eine Ableitungsregel, die durch das Zugangsgerät eines Mobilfunknetzes verwendet wird, um einen Schlüssel für das Zugangsgerät eines Nicht-Mobilfunknetzes abzuleiten.

7. Verfahren nach Anspruch 5 oder 6, wobei
der durch die UE bestimmte Schlüssel gleich einem Schlüssel ist, der durch ein Zugangsgerät eines Mobilfunknetzes bestimmt und an das Zugangsgerät eines Nicht-Mobilfunknetzes gesendet wird.

8. Zugangsauthentifizierungsverfahren, Folgendes umfassend:
Empfangen (1601) eines Schlüssels, der durch ein Zugangsgerät eines Mobilfunknetzes versandt wird, durch ein Zugangsgerät eines Nicht-Mobilfunknetzes, wobei der Schlüssel verwendet wird, um das Zugangsgerät eines Nicht-Mobilfunknetzes zu instruieren, eine Sicherheitsauthentifizierung mit einer Benutzerausrüstung, UE, durchzuführen, die mit dem Zugangsgerät eines Nicht-Mobilfunknetzes assoziiert ist,
Bestimmen (1602) einer Schlüsselkennung, die dem Schlüssel entspricht, durch das Zugangsgerät eines Nicht-Mobilfunknetzes,
Durchführen (1603) der Sicherheitsauthentifizierung mit der UE unter Verwendung der Schlüsselkennung und des Schlüssels durch das Zugangsgerät eines Nicht-Mobilfunknetzes,
wobei der Schlüssel von einem Schlüssel des Zugangsgeräts eines Mobilfunknetzes abgeleitet wird und eine Ableitungsregel, die verwendet wird, um den Schlüssel abzuleiten, die gleiche ist wie eine Ableitungsregel, die verwendet wird, um einen Schlüssel durch die UE abzuleiten.

9. Verfahren nach Anspruch 8, wobei das Bestimmen (1602) einer Schlüsselkennung, die dem Schlüssel entspricht, durch das Zugangsgerät eines Nicht-Mobilfunknetzes Folgendes umfasst:
Empfangen der Schlüsselkennung, die dem Schlüssel entspricht und die durch das Zugangsgerät eines Mobilfunknetzes versandt wird, durch das Zugangsgerät eines Nicht-Mobilfunknetzes.

10. Verfahren nach Anspruch 8 oder 9, wobei
der von dem Zugangsgerät eines Mobilfunknetzes empfangene Schlüssel gleich einem Schlüssel ist, der durch die UE für die Sicherheitsauthentifizierung bestimmt wird.

11. Vorrichtung, wobei die Vorrichtung auf ein Zugangsgerät eines Mobilfunknetzes angewandt wird und Folgendes umfasst:
eine Verarbeitungseinheit (1801), die dafür konfiguriert ist, einen Schlüssels für ein Zugangsgerät eines Nicht-Mobilfunknetzes zu bestimmen, wobei der Schlüssel verwendet wird, um eine Sicherheitsauthentifizierung zwischen Benutzerausrüstung, UE, und dem Zugangsgerät eines Nicht-Mobilfunknetzes durchzuführen, und eine Art und Weise des Bestimmens eines Schlüssels durch die Verarbeitungseinheit die gleiche ist wie eine Art und Weise des Bestimmens eines Schlüssels durch die UE, und
eine Sendempfangseinheit (1802), die dafür konfiguriert ist, den durch die Verarbeitungseinheit bestimmten Schlüssel an das Zugangsgerät eines Nicht-Mobilfunknetzes zu senden,
wobei der Schlüssel von einem Schlüssel des Zugangsgerätes eines Mobilfunknetzes abgeleitet ist und eine Ableitungsregel, die verwendet wird, um den Schlüssel abzuleiten, die gleiche ist wie eine Ableitungsregel, die verwendet wird, um einen Schlüssel durch die UE abzuleiten.

12. Vorrichtung nach Anspruch 11, wobei die Verarbeitungseinheit (1801) speziell dafür konfiguriert ist, den Schlüssel für das Zugangsgerät eines Nicht-Mobilfunknetzes basierend auf einem Schlüssel abzuleiten, der mit der UE gemeinsam genutzt wird, und eine Ableitungsregel, die verwendet wird, um den Schlüssel abzuleiten, vorkonfiguriert ist und die gleiche ist, wie eine Ableitungsregel, die in der UE vorkonfiguriert ist und die verwendet wird, um einen Schlüssel abzuleiten.

13. Vorrichtung nach Anspruch 11, wobei die Verarbeitungseinheit (1802) speziell dafür konfiguriert ist, den Schlüssel für das Zugangsgerät eines Nicht-Mobilfunknetzes basierend auf einem Schlüssel abzuleiten, der mit der UE gemeinsam genutzt wird, und
die Sendeempfangseinheit (1802) ferner dafür konfiguriert ist, eine Ableitungsregel an die UE zu senden, die verwendet wird, um den Schlüssel abzuleiten, wobei die Ableitungsregel von der UE verwendet wird, um einen Schlüssel zum Durchführen einer Sicherheitsauthentifizierung mit dem Zugangsgerät eines Nicht-Mobilfunknetzes abzuleiten.

14. Vorrichtung nach einem der Ansprüche 11 bis 13, wobei die Verarbeitungseinheit (1801) speziell für Folgendes konfiguriert ist:
Bestimmen einer logischen funktionalen Entität, die das Zugangsgerät eines Nicht-Mobilfunknetzes verwaltet, wobei die logische funktionale Entität mindestens ein Zugangsgerät eines Nicht-Mobilfunknetzes verwaltet, das das Zugangsgerät eines Nicht-Mobilfunknetzes umfasst, wobei das mindestens eine Zugangsgerät eines Nicht-Mobilfunknetzes in mindestens einer Gruppe von Zugangsgeräten eines Nicht-Mobilfunknetzes enthalten ist, und
Bestimmen eines Schlüssels für jede Gruppe von Zugangsgeräten eines Nicht-Mobilfunknetzes, wobei Schlüssel, die Kennungen von allen Zugangsgeräten eines Nicht-Mobilfunknetzes entsprechen, die in jeder Gruppe von Zugangsgeräten eines Nicht-Mobilfunknetzes enthalten sind, gleich sind, und der Schlüssel verwendet wird, um eine Sicherheitsauthentifizierung zwischen der UE und einem Zugangsgerät eines Nicht-Mobilfunknetzes durchzuführen, das einer Kennung des Zugangsgeräts eines Nicht-Mobilfunknetzes entspricht.

15. Vorrichtung, wobei die Vorrichtung auf eine Benutzerausrüstung, UE angewandt wird und Folgendes umfasst:
ein Bestimmungsmodul (1901), das dafür konfiguriert ist, einen Schlüssel zu bestimmen, wobei der Schlüssel verwendet wird, um eine Sicherheitsauthentifizierung zwischen der UE und einem Zugangsgerät eines Nicht-Mobilfunknetzes durchzuführen, und dafür, eine Schlüsselkennung zu bestimmen, die dem Schlüssel entspricht, und
ein Authentifizierungsmodul (1902), das dafür konfiguriert ist, eine Sicherheitsauthentifizierung mit dem Zugangsgerät eines Nicht-Mobilfunknetzes unter Verwendung des Schlüssels und der Schlüsselkennung durchzuführen,
wobei der Schlüssel von einem Schlüssel der UE abgeleitet ist und eine Ableitungsregel, die verwendet wird, um den Schlüssel abzuleiten, die gleiche ist wie eine Ableitungsregel, die verwendet wird, um einen Schlüssel durch ein Zugangsgerät eines Mobilfunknetzes abzuleiten.

16. Vorrichtung nach Anspruch 15, wobei die Bestimmungseinheit (1901) speziell dafür konfiguriert ist, basierend auf einem Schlüssel, der mit einem Zugangsgerät eines Mobilfunknetzes gemeinsam genutzt wird, den Schlüssel unter Anwendung einer Ableitungsregel abzuleiten, wobei
die Ableitungsregel durch das Zugangsgerät eines Mobilfunknetzes versandt wird oder die Ableitungsregel in der UE vorkonfiguriert ist und die gleiche ist wie eine Ableitungsregel, die durch das Zugangsgerät eines Mobilfunknetzes verwendet wird, um einen Schlüssel für das Zugangsgerät eines Nicht-Mobilfunknetzes abzuleiten.

17. Vorrichtung nach Anspruch 15 oder 16, wobei
der durch die Bestimmungseinheit (1901) bestimmte Schlüssel gleich einem Schlüssel ist, der durch ein Zugangsgerät eines Mobilfunknetzes bestimmt und an das Zugangsgerät eines Nicht-Mobilfunknetzes gesendet wird.

18. Vorrichtung, wobei die Vorrichtung auf ein Zugangsgerät eines Nicht-Mobilfunknetzes angewandt wird und Folgendes umfasst:
eine Sendeempfangseinheit (2001), die dafür konfiguriert ist, einen Schlüssel zu empfangen, der durch ein Zugangsgerät eines Mobilfunknetzes versandt wird, wobei der Schlüssel verwendet wird, um das Zugangsgerät eines Nicht-Mobilfunknetzes zu instruieren, eine Sicherheitsauthentifizierung mit einer Benutzerausrüstung, UE durchzuführen, die mit dem Zugangsgerät eines Nicht-Mobilfunknetzes assoziiert ist, eine Verarbeitungseinheit (2002), die dafür konfiguriert ist, eine Schlüsselkennung zu bestimmen, die dem Schlüssel entspricht, und die Sicherheitsauthentifizierung mit der UE unter Verwendung der Schlüsselkennung und des Schlüssels durchzuführen, wobei der Schlüssel von einem Schlüssel des Zugangsgeräts eines Mobilfunknetzes abgeleitet ist und eine Ableitungsregel, die verwendet wird, um den Schlüssel abzuleiten, die gleiche ist wie eine Ableitungsregel, die verwendet wird, um einen Schlüssel durch die UE abzuleiten.

19. Vorrichtung nach Anspruch 18, wobei die Sendeempfangseinheit (2001) ferner dafür konfiguriert ist, die Schlüsselkennung zu empfangen, die dem Schlüssel entspricht, und die durch das Zugangsgerät eines Mobilfunknetzes versandt wird.

20. Vorrichtung nach Anspruch 18 oder 19, wobei
der von dem Zugangsgerät eines Mobilfunknetzes empfangene Schlüssel gleich einem Schlüssel ist, der durch die UE für die Sicherheitsauthentifizierung bestimmt wird.

21. Kommunikationssystem, ein Zugangsgerät eines Mobilfunknetzes, ein Zugangsgerät eines Nicht-Mobilfunknetzes und Benutzerausrüstung, UE umfassend, wobei das Zugangsgerät eines Mobilfunknetzes die Vorrichtung nach einem der Ansprüche 11 bis 14 umfasst,
das Zugangsgerät eines Nicht-Mobilfunknetzes die Vorrichtung nach einem der Ansprüche 17 bis 19 umfasst.

22. Computerlesbares Speichermedium, Instruktionen umfassend, die bei Ausführung durch einen Computer den Computer veranlassen, eines der Verfahren nach Anspruch 1 bis 10 auszuführen.

## Revendications

1. Procédé d'authentification d'accès, consistant à :
déterminer (1401), par un dispositif d'accès de réseau cellulaire, une clé pour un dispositif d'accès de réseau non cellulaire, la clé étant utilisée pour réaliser une authentification de sécurité entre un équipement d'utilisateur (UE) et le dispositif d'accès de réseau non cellulaire, et une manière de détermination d'une clé par le dispositif d'accès de réseau cellulaire étant la même qu'une manière de détermination d'une clé par l'UE ; et
envoyer (1402), par le dispositif d'accès de réseau cellulaire, la clé déterminée au dispositif d'accès de réseau non cellulaire ;
la clé étant déduite d'une clé du dispositif d'accès de réseau cellulaire, et une règle de déduction utilisée pour déduire la clé étant la même qu'une règle de déduction qui est utilisée pour déduire une clé par l'UE.

2. Procédé selon la revendication 1, dans lequel la détermination (1401), par un dispositif d'accès de réseau cellulaire, d'une clé pour un dispositif d'accès de réseau non cellulaire consiste à :
déduire, par le dispositif d'accès de réseau cellulaire, la clé pour le dispositif d'accès de réseau non cellulaire sur la base d'une clé partagée avec l'UE, une règle de déduction utilisée pour déduire la clé étant préconfigurée et étant la même qu'une règle de déduction qui est préconfigurée dans l'UE et qui est utilisée pour déduire une clé.

3. Procédé selon la revendication 1, dans lequel la détermination (1401), par un dispositif d'accès de réseau cellulaire, d'une clé pour un dispositif d'accès de réseau non cellulaire consiste à :
déduire, par le dispositif d'accès de réseau cellulaire, la clé pour le dispositif d'accès de réseau non cellulaire sur la base d'une clé partagée avec l'UE ; et
le procédé consistant en outre à :
envoyer, par le dispositif d'accès de réseau cellulaire à l'UE, une règle de déduction utilisée pour déduire la clé, la règle de déduction étant utilisée par l'UE pour déduire une clé pour réaliser une authentification de sécurité avec le dispositif d'accès de réseau non cellulaire.

4. Procédé selon l'une quelconque des revendications 1 à 3, dans lequel la détermination (1401), par un dispositif d'accès de réseau cellulaire, d'une clé pour un dispositif d'accès de réseau non cellulaire consiste à :
déterminer, par le dispositif d'accès de réseau cellulaire, une entité fonctionnelle logique gérant le dispositif d'accès de réseau non cellulaire, l'entité fonctionnelle logique gérant au moins un dispositif d'accès de réseau non cellulaire qui comprend le dispositif d'accès de réseau non cellulaire, et l'au moins un dispositif d'accès de réseau non cellulaire étant compris dans au moins un groupe de dispositifs d'accès de réseau non cellulaire ; et
déterminer, par le dispositif d'accès de réseau cellulaire, une clé pour chaque groupe de dispositifs d'accès de réseau non cellulaire, des clés correspondant à des identifiants de tous les dispositifs d'accès de réseau non cellulaire compris dans chaque groupe de dispositifs d'accès de réseau non cellulaire étant les mêmes, et la clé étant utilisée pour réaliser une authentification de sécurité entre l'UE et un dispositif d'accès de réseau non cellulaire correspondant à un identifiant du dispositif d'accès de réseau non cellulaire.

5. Procédé d'authentification d'accès, consistant à :
déterminer (1501), par un équipement d'utilisateur (UE), une clé, la clé étant utilisée pour réaliser une authentification de sécurité entre l'UE et un dispositif d'accès de réseau non cellulaire ;
déterminer (1502), par l'UE, un identifiant de clé correspondant à la clé ; et
réaliser (1503), par l'UE, une authentification de sécurité avec le dispositif d'accès de réseau non cellulaire au moyen de la clé et de l'identifiant de clé ;
la clé étant déduite d'une clé de l'UE, et une règle de déduction utilisée pour déduire la clé étant la même qu'une règle de déduction qui est utilisée pour déduire une clé par un dispositif d'accès de réseau cellulaire.

6. Procédé selon la revendication 5, dans lequel la détermination (1501), par un UE, d'une clé consiste à :
déduire, par l'UE sur la base d'une clé partagée avec un dispositif d'accès de réseau cellulaire, la clé au moyen d'une règle de déduction,
la règle de déduction étant envoyée par le dispositif d'accès de réseau cellulaire ou la règle de déduction étant préconfigurée dans l'UE et étant la même qu'une règle de déduction utilisée par le dispositif d'accès de réseau cellulaire pour déduire une clé pour le dispositif d'accès de réseau non cellulaire.

7. Procédé selon la revendication 5 ou 6, dans lequel :
la clé déterminée par l'UE est la même qu'une clé qui est déterminée par un dispositif d'accès de réseau cellulaire et qui est envoyée au dispositif d'accès de réseau non cellulaire.

8. Procédé d'authentification d'accès, consistant à :
recevoir (1601), par un dispositif d'accès de réseau non cellulaire, une clé envoyée par un dispositif d'accès de réseau cellulaire, la clé étant utilisée pour donner l'instruction au dispositif d'accès de réseau non cellulaire de réaliser une authentification de sécurité avec un équipement d'utilisateur (UE) associé au dispositif d'accès de réseau non cellulaire ;
déterminer (1602), par le dispositif d'accès de réseau non cellulaire, un identifiant de clé correspondant à la clé ; et
réaliser (1603), par le dispositif d'accès de réseau non cellulaire, une authentification de sécurité avec l'UE au moyen de l'identifiant de clé et de la clé ;
la clé étant déduite d'une clé du dispositif d'accès de réseau cellulaire, et une règle de déduction utilisée pour déduire la clé étant la même qu'une règle de déduction qui est utilisée pour déduire une clé par l'UE.

9. Procédé selon la revendication 8, dans lequel la détermination (1602), par le dispositif d'accès de réseau non cellulaire, d'un identifiant de clé correspondant à la clé consiste à :
recevoir, par le dispositif d'accès de réseau non cellulaire, l'identifiant de clé qui correspond à la clé et qui est envoyé par le dispositif d'accès de réseau cellulaire.

10. Procédé selon la revendication 8 ou 9, dans lequel :
la clé reçue en provenance du dispositif d'accès de réseau cellulaire est la même qu'une clé déterminée par l'UE pour l'authentification de sécurité.

11. Appareil, l'appareil étant appliqué à un dispositif d'accès de réseau cellulaire et comprenant :
une unité de traitement (1801), configurée pour déterminer une clé pour un dispositif d'accès de réseau non cellulaire, la clé étant utilisée pour réaliser une authentification de sécurité entre un équipement d'utilisateur (UE) et le dispositif d'accès de réseau non cellulaire, et une manière de détermination d'une clé par l'unité de traitement étant la même qu'une manière de détermination d'une clé par l'UE ; et
une unité émettrice-réceptrice (1802), configurée pour envoyer la clé déterminée par l'unité de traitement au dispositif d'accès de réseau non cellulaire ;
la clé étant déduite d'une clé du dispositif d'accès de réseau cellulaire, et une règle de déduction utilisée pour déduire la clé étant la même qu'une règle de déduction qui est utilisée pour déduire une clé par l'UE.

12. Appareil selon la revendication 11, dans lequel l'unité de traitement (1801) est spécifiquement configurée pour déduire la clé pour le dispositif d'accès de réseau non cellulaire sur la base d'une clé partagée avec l'UE, et une règle de déduction utilisée pour déduire la clé est préconfigurée et est la même qu'une règle de déduction qui est préconfigurée dans l'UE et qui est utilisée pour déduire une clé.

13. Appareil selon la revendication 11, dans lequel l'unité de traitement (1802) est spécifiquement configurée pour déduire la clé pour le dispositif d'accès de réseau non cellulaire sur la base d'une clé partagée avec l'UE ; et
l'unité émettrice-réceptrice (1802) est en outre configurée pour envoyer, à l'UE, une règle de déduction utilisée pour déduire la clé, et la règle de déduction est utilisée par l'UE pour déduire une clé pour réaliser une authentification de sécurité avec le dispositif d'accès de réseau non cellulaire.

14. Appareil selon l'une quelconque des revendications 11 à 13, dans lequel l'unité de traitement (1801) est spécifiquement configurée pour :
déterminer une entité fonctionnelle logique gérant le dispositif d'accès de réseau non cellulaire, l'entité fonctionnelle logique gérant au moins un dispositif d'accès de réseau non cellulaire qui comprend le dispositif d'accès de réseau non cellulaire, et l'au moins un dispositif d'accès de réseau non cellulaire étant compris dans au moins un groupe de dispositifs d'accès de réseau non cellulaire ; et
déterminer une clé pour chaque groupe de dispositifs d'accès de réseau non cellulaire, des clés correspondant à des identifiants de tous les dispositifs d'accès de réseau non cellulaire compris dans chaque groupe de dispositifs d'accès de réseau non cellulaire étant les mêmes, et la clé étant utilisée pour réaliser une authentification de sécurité entre l'UE et un dispositif d'accès de réseau non cellulaire correspondant à un identifiant du dispositif d'accès de réseau non cellulaire.

15. Appareil, l'appareil étant appliqué à un équipement d'utilisateur (UE) et comprenant :
une unité de détermination (1901), configurée pour déterminer une clé, la clé étant utilisée pour réaliser une authentification de sécurité entre l'UE et un dispositif d'accès de réseau non cellulaire ; et déterminer un identifiant de clé correspondant à la clé ; et
une unité d'authentification (1902), configurée pour réaliser une authentification de sécurité avec le dispositif d'accès de réseau non cellulaire au moyen de la clé et de l'identifiant de clé ;
la clé étant déduite d'une clé de l'UE, et une règle de déduction utilisée pour déduire la clé étant la même qu'une règle de déduction qui est utilisée pour déduire une clé par un dispositif d'accès de réseau cellulaire.

16. Appareil selon la revendication 15, dans lequel l'unité de détermination (1901) est spécifiquement configurée pour déduire, sur la base d'une clé partagée avec un dispositif d'accès de réseau cellulaire, la clé au moyen d'une règle de déduction,
la règle de déduction étant envoyée par le dispositif d'accès de réseau cellulaire ou la règle de déduction étant préconfigurée dans l'UE et étant la même qu'une règle de déduction utilisée par le dispositif d'accès de réseau cellulaire pour déduire une clé pour le dispositif d'accès de réseau non cellulaire.

17. Appareil selon la revendication 15 ou 16, dans lequel :
la clé déterminée par l'unité de détermination (1901) est la même qu'une clé qui est déterminée par un dispositif d'accès de réseau cellulaire et qui est envoyée au dispositif d'accès de réseau non cellulaire.

18. Appareil, l'appareil étant appliqué à un dispositif d'accès de réseau non cellulaire et comprenant :
une unité émettrice-réceptrice (2001), configurée pour recevoir une clé envoyée par un dispositif d'accès de réseau cellulaire, la clé étant utilisée pour donner l'instruction au dispositif d'accès de réseau non cellulaire de réaliser une authentification de sécurité avec un équipement d'utilisateur (UE) associé au dispositif d'accès de réseau non cellulaire ; et
une unité de traitement (2002), configurée pour déterminer un identifiant de clé correspondant à la clé et réaliser une authentification de sécurité avec l'UE au moyen de l'identifiant de clé et de la clé ;
la clé étant déduite d'une clé du dispositif d'accès de réseau cellulaire, et une règle de déduction utilisée pour déduire la clé étant la même qu'une règle de déduction qui est utilisée pour déduire une clé par l'UE.

19. Appareil selon la revendication 18, dans lequel l'unité émettrice-réceptrice (2001) est en outre configurée pour recevoir l'identifiant de clé qui correspond à la clé et qui est envoyé par le dispositif d'accès de réseau cellulaire.

20. Appareil selon la revendication 18 ou 19, dans lequel :
la clé reçue en provenance du réseau d'accès de réseau cellulaire est la même qu'une clé déterminée par l'UE pour l'authentification de sécurité.

21. Système de communication, comprenant un dispositif d'accès de réseau cellulaire, un dispositif d'accès de réseau non cellulaire et un équipement d'utilisateur (UE),
le dispositif d'accès de réseau cellulaire comprenant l'appareil selon l'une quelconque des revendications 11 à 14 ;
le dispositif d'accès de réseau non cellulaire comprenant l'appareil selon les revendications 17 à 19.

22. Support de stockage lisible par ordinateur comprenant des instructions qui, lorsqu'elles sont exécutées par un ordinateur, amènent l'ordinateur à réaliser l'un quelconque des procédés selon les revendications 1 à 10.
